(19) **Europäisches Patentamt European Patent Office Office européen des brevets**

(11) **EP 4 617 999 A1**

(12) **EUROPEAN PATENT APPLICATION**
published in accordance with Art. 153(4) EPC

(43) Date of publication:
**17.09.2025 Bulletin 2025/38**

(21) Application number: **24855426.3**

(22) Date of filing: **17.06.2024**

(51) International Patent Classification (IPC):
**G06T 5/00** (2024.01)     **G06N 3/0455** (2023.01)

(52) Cooperative Patent Classification (CPC):
**G06T 5/70; G06N 3/045; G06N 3/0455; G06N 3/0464; G06T 5/00; G06V 10/82; G06V 40/16;** G06T 2207/20081; G06T 2207/20084; G06T 2207/30201

(86) International application number:
**PCT/CN2024/099632**

(87) International publication number:
**WO 2025/039697 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.08.2023 CN 202311057364**

(71) Applicant: **Tencent Technology (Shenzhen) Company Limited Shenzhen, Guangdong 518057 (CN)**

(72) Inventors:
• **LUO, Feng**
  **Shenzhen, Guangdong 518057 (CN)**
• **XIANG, Jinxi**
  **Shenzhen, Guangdong 518057 (CN)**
• **ZHANG, Jun**
  **Shenzhen, Guangdong 518057 (CN)**

(74) Representative: **Gunzelmann, Rainer Wuesthoff & Wuesthoff Patentanwälte und Rechtsanwalt PartG mbB Schweigerstraße 2 81541 München (DE)**

(54) **IMAGE ENHANCEMENT METHOD AND APPARATUS, ELECTRONIC DEVICE, COMPUTER-READABLE STORAGE MEDIUM AND COMPUTER PROGRAM PRODUCT**

(57)     Provided in the present application are an image enhancement method and apparatus, an electronic device, a computer-readable storage medium and a computer program product, which can be applied to various scenarios such as cloud technology, artificial intelligence, smart transportation, and driver assistance. The method comprises: acquiring a latent variable of a facial image to be enhanced, and adding noise to the latent variable, so as to obtain a noisy latent variable of said facial image, said facial image being an image of the face of a target subject; extracting facial features of the face in said facial image; on the basis of the facial features, denoising the noisy latent variable, so as to obtain a denoised latent variable of said facial image; and performing image reconstruction on the denoised latent variable, so as to obtain an enhanced facial image of said facial image.

Obtain a latent variable of a to-be-enhanced face image, and add noise to the latent variable, to obtain a noised latent variable of the face image — 101

Extract a facial feature of a face in the face image — 102

Denoise the noised latent variable in conjunction with the facial feature, to obtain a denoised latent variable of the face image — 103

Perform image reconstruction on the denoised latent variable to obtain an enhanced face image of the face — 104

FIG. 3

**Description**

RELATED APPLICATION

This application claims priority to Chinese Patent Application No. 2023110573649, filed on August 21, 2023, which is incorporated by reference in its entirety.

FIELD OF THE TECHNOLOGY

The invention relates to the field of artificial intelligence technologies, and in particular, to an image enhancement method and apparatus, an electronic device, a computer-readable storage medium, and a computer program product.

BACKGROUND OF THE DISCLOSURE

Artificial intelligence (AI) is a comprehensive technology in computer science that studies the design principles and implementation methods of various intelligent machines, enabling the machines to have the functions of perception, reasoning, and decision-making. The artificial intelligence technology is a comprehensive subject, and relates to a wide range of fields, involving several directions such as natural language processing and machine learning/deep learning. With the development of technology, the artificial intelligence technology is applied to more fields, and plays an increasingly important value.

Image enhancement is also an important application direction of artificial intelligence. In the related art, image enhancement for a face image is usually to gradually add noise to the face image until the face image completely becomes a random noise image. Then, starting from the random noise image, the noise is gradually removed to obtain a final enhanced face image. However, since it is not easy to control the denoising strength in a denoising process, a large number of original features are easily lost in the final enhanced face image. As a result, the enhancement effect on the enhanced face image is poor.

SUMMARY

Embodiments of the invention provide an image enhancement method and apparatus, an electronic device, a computer-readable storage medium, and a computer program product, which can improve an image enhancement effect on a face image.

Technical solutions of the embodiments of the invention are implemented as follows:

An embodiment of the invention provides an image enhancement method, applied to an electronic device and including:

obtaining a latent variable of a face image, and adding noise to the latent variable, to obtain a noised latent variable of the face image, the face image being an image of a face of a pre-defined object;

extracting a facial feature of the face from the face image;

denoising the noised latent variable using the facial feature, to obtain a denoised latent variable of the face image; and

performing image reconstruction on the denoised latent variable to obtain an enhanced face image.

An embodiment of the invention further provides an image enhancement apparatus, including:

an obtaining module, configured to: obtain a latent variable of a face image, and add noise to the latent variable, to obtain a noised latent variable of the face image, the face image being an image of a face of a pre-defined object;

an extraction module, configured to extract a facial feature of the face from the face image;

a denoising module, configured to denoise the noised latent variable using the facial feature, to obtain a denoised latent variable of the face image; and

a reconstruction module, configured to perform image reconstruction on the denoised latent variable to obtain an enhanced face image.

An embodiment of the invention further provides an electronic device, including:

a memory, configured to store a computer-executable instruction; and

a processor, configured to implement, when executing the computer-executable instruction stored in the memory, an image enhancement method according to an embodiment of the invention.

An embodiment of the invention further provides a computer-readable storage medium, having a computer-executable instruction or a computer program stored therein, the computer-executable instruction or the computer program, when executed by a processor, implementing an image enhancement method according to an embodiment of the invention.

An embodiment of the invention further provides a computer program product, including a computer-executable instruction or a computer program, the computer-executable instruction or the computer program, when executed by a processor, implementing an image enhancement method according to an embodiment of the invention.

The embodiments of the invention have the following beneficial effects:

By applying the above embodiments of the invention, a latent variable of a face image is first obtained, and noise is added to the latent variable, to obtain a noised latent variable of the face image. Then, a facial feature of a face is extracted from the face image. Thus, the noised latent variable is denoised in conjunction with the facial feature, to obtain a denoised latent variable of the face image. Image reconstruction is performed on the denoised latent variable to obtain an enhanced face image of the face image. Herein, in the image enhancement process of the face image, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and enhances an image enhancement effect on the face image.

BRIEF DESCRIPTION OF THE DRAWINGS

FIG. 1 is a schematic architecture diagram of an image enhancement system according to an embodiment of the invention.

FIG. 2 is a schematic structural diagram of an electronic device according to an embodiment of the invention.

FIG. 3 is a flowchart of an image enhancement method according to an embodiment of the invention.

FIG. 4 is a flowchart of an image enhancement method according to an embodiment of the invention.

FIG. 5 is a processing flowchart of fused face information according to an embodiment of the invention.

FIG. 6 is a schematic structural diagram of an image enhancement model according to an embodiment of the invention.

FIG. 7 is a schematic structural diagram of an image enhancement model according to an embodiment of the invention.

FIG. 8 is a schematic diagram of generation of an image mask according to an embodiment of the invention.

FIG. 9 is a schematic structural diagram of an image generation and diffusion model according to an embodiment of the invention.

FIG. 10 is a flowchart of an image enhancement method according to an embodiment of the invention.

FIG. 11 is a schematic diagram of self-attention processing according to an embodiment of the invention.

FIG. 12 is a schematic structural diagram of an image denoising model according to an embodiment of the invention.

FIG. 13 is a schematic diagram of a stitching and inpainting result of a refined face image according to an embodiment of the invention.

FIG. 14 is a schematic diagram of an enhanced face image according to an embodiment of the invention.

DESCRIPTION OF EMBODIMENTS

To make the objectives, technical solutions, and advantages of the invention clearer, the following describes the invention in further detail with reference to the accompanying drawings. The described embodiments are not to be considered as a limitation to the invention. All other embodiments obtained by a person of ordinary skill in the art without creative efforts shall fall within the protection scope of the invention.

In the following descriptions, related "some embodiments" describe a subset of all possible embodiments. However, the "some embodiments" may be the same subset or different subsets of all the possible embodiments, and may be combined with each other without conflict. The features defined in the "some embodiments" can also be used in other embodiments, and can be combined with each other without conflict.

The terms, involved in the following description, "first/second/ third" are merely intended to distinguish similar objects rather than describing specific orders. "First/second/ third" is interchangeable in proper circumstances to enable the embodiments of the invention to be implemented in other orders than those illustrated or described herein.

Unless otherwise defined, meanings of all technical and scientific terms used in the embodiments of the invention are the same as those usually understood by a person skilled in the art. Terms used in the embodiments of the invention are merely intended to describe objectives of the embodiments of the invention, but are not intended to limit the invention.

Before the embodiments of the invention are further described in detail, a description is made on nouns and terms in the embodiments of the invention, and the nouns and terms in the embodiments of the invention are applicable to the following explanations.

1) Client: It is an application that runs in a terminal and provides various services, such as a client that supports image enhancement.

2) Being in response to: It is configured for representing a condition or state on which a performed operation depends. When the dependent condition or state is satisfied, one or more operations performed may be in real time or may have a set delay. Without being specifically stated, there is no limitation to the order in which the operations are performed.

3) Convolutional neural network (CNN): It is a feedforward neural network. Artificial neurons of the neural network can respond to some surrounding units within a coverage range, and has excellent performance for large-scale image processing. The convolutional neural network is composed of one or more convolutional layers and a fully-connected layer (corresponding to a classic neural network) at the top, and further includes an association weight and a pooling layer.

4) U-network model (U-Net): It is an algorithm for semantic segmentation by using a full convolutional network.

5) Attention: It is a problem-solving method designed to imitate human attention, meaning that high-value information is quickly screened out from a large amount of information. This is mainly configured for solving a problem that it is difficult to obtain a proper vector representation when an input sequence of a time sequence model is long. The method is to keep an intermediate result of the time sequence model, learn the intermediate result by using a new model, and associate the intermediate result with an output, thereby achieving an objective of information screening.

6) Latent variable: The latent variable may alternatively be referred to as a latent variable or a latent variable. Compared with an observed variable, the latent variable means a random variable that cannot be directly observed. The latent variable may be deduced according to data observed by using a mathematic model. A mathematic model that uses the latent variable to explain the observed variable is referred to as a latent variable model. During machine learning, although the latent variable is a variable that cannot be directly observed, the latent variable explains a behavior or characteristic of observable data to a specific extent. A latent variable model assumes that the observed data is generated based on the latent variable, but the latent variable is not observable. A value of the latent variable may be deduced by analyzing the observed data.

7) Receptive field: In machine learning, particularly in deep learning, a receptive field means a part of inputted data that may be affected by a neuron or a group of neurons in a neural network. The receptive field is an important concept because it determines which features in the inputted data can be detected by a feature detector (i.e., a neuron) in the neural network. In a convolutional neural network, the receptive field is usually related to a size and step of a filter. The filter slides on an inputted image (i.e., performs a convolution operation). Each step of sliding covers a new region on the image. This region is a receptive field of the filter. With the deepening of the network, the size of the filter usually increases. Therefore, the receptive field also correspondingly increases. The importance of the receptive field is that the receptive field determines a size and position of a feature that may be captured by a model. The receptive field is a key concept in deep learning, and directly affects which features a model can learn from the inputted data and how these features affect the performance of the model on a specific task.

8) Encoding: In artificial intelligence, encoding means converting inputted data into a form more suitable for being processed, usually a digit representation, so as to perform analysis and learning through a machine learning algorithm. An encoding process may be directly converting original data into a digit, or may be abstracting and simplifying data to create a more compact and useful representation.

9) Decoding: In artificial intelligence, decoding usually means converting data from one format into another format that can be understood or operated. A decoding process may involve various types of data, including text, images, audios, and the like. In machine vision, decoding may involve converting image data into a recognizable object, scene, or emotion state. For example, an image is encoded through a convolutional neural network, and then an encoded image feature is converted back to original image data through a decoder (for example, a decoder in a generative adversarial network). In conclusion, decoding is a key concept in artificial intelligence, and involves converting a complex digital representation into a data format that is easier to understand and operate. The purpose of decoding is to extract useful information from inputted data and convert the useful information into a task that can be understood and executed by a machine.

Based on the foregoing descriptions of the nouns and terms in the embodiments of the invention, the following describes the embodiments of the invention in detail. Embodiments of the invention provide an image enhancement method and apparatus, an electronic device, a computer-readable storage medium, and a computer program product, which can improve an image enhancement effect on a face image.

Herein, during example application of the relevant data collection and processing in the invention, the informed consent or individual consent of a personal information subject needs to be obtained in strict accordance with the requirements of relevant national laws and regulations, and the subsequent data use and processing behavior is carried out within the scope of authorization of laws and regulations and the personal information subject.

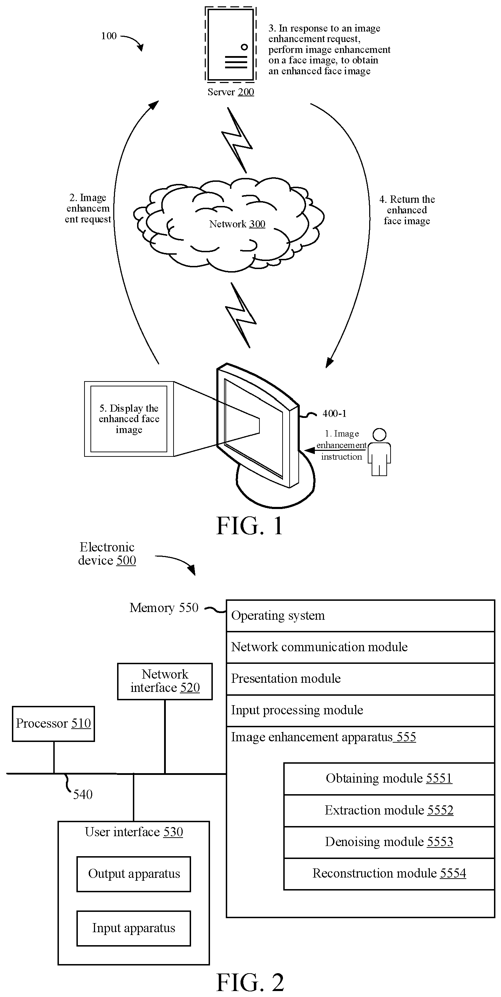

The following describes an image enhancement system according to an embodiment of the invention. FIG. 1 is a schematic architecture diagram of an image enhancement system according to an embodiment of the invention. To support an exemplary application, the image enhancement system 100 includes: a server 200, a network 300, and a terminal 400. The terminal 400 is connected to the server 200 through the network 300. The network 300 may be a wide area network, a local area network, or a combination of the wide area network and the local area network. Data transmission is achieved through a wireless or wired link.

Herein, the terminal 400 (for example, on which a client that supports image enhancement runs) transmits a face image and an image enhancement request for the face image to the server 200 in response to an image enhancement instruction for a to-be-enhanced face image. The face image is an image of a face of a target object (i.e., a pre-defined object). The target object is referred to as the pre-defined object hereinafter. The server 200 is configured to: receive the face image and the image enhancement request; obtain a latent variable of the face image in response to the image enhancement request, and add noise to the latent variable to obtain a noised latent variable of the face image; extract a facial feature of a face from the face image; denoise the noised latent variable in conjunction with the facial feature, to obtain a denoised latent variable of the face image; perform image reconstruction on the denoised latent variable to obtain an enhanced face image of the face image; and return the enhanced face image to the terminal 400. The terminal 400 receives and displays the enhanced face image.

In some embodiments, the image enhancement method according to this embodiment of the invention may be performed by an electronic device, for example, by a terminal alone, or may be performed by a server alone, or may be collaboratively performed by a terminal and a server. The embodiments of the invention may be applied to various scenes, including but not limited to a cloud technology, artificial intelligence, intelligent transportation, aided driving, video, animation, game, metaverse, image generation, user generated content (UGC), and the like.

In some embodiments, the electronic device that implements the image enhancement method according to this embodiment of the invention may be various types of terminals or servers. A server (for example, the server 200) may be an independent physical server, a server cluster composed of a plurality of physical servers, or a distributed system. A terminal (for example, the terminal 400) may be a notebook computer, a tablet computer, a desktop computer, a smartphone, a smart voice interaction device (such as a smart speaker), a smart home appliance (such as a smart television), a smart watch, an in-vehicle terminal, a wearable device, a virtual reality (VR) device, or the like, but is not limited thereto. The terminal and the server may be directly or indirectly connected through wired or wireless communication. This is not limited in this embodiment of the invention.

In some embodiments, the image enhancement method according to the embodiments of the invention may be implemented by virtue of a cloud technology. The cloud technology is a hosting technology that unifies a series of resources such as hardware, software, and networks in a wide area network or a local area network to implement computing, storage, processing, and sharing of data. The cloud technology is a generic term of a network technology, an information technology, an integration technology, a management platform technology, and an application technology based on application of a cloud computing business model. The resources may form a resource pool and are used on demand, which is flexible and convenient. The cloud computing technology will become an important support. Backend services of a technological network system require a lot of computing and storage resources. In an example, the server (for example, the server 200) may alternatively be a cloud server that provides a cloud service, a cloud database, cloud computing, a cloud function, cloud storage, a network service, cloud communication, a middleware service, a domain name service, a security service, a content delivery network (CDN), big data, and a basic cloud computing service such as big data and an artificial intelligence platform.

In some embodiments, the image enhancement method according to the embodiments of the invention may be implemented by virtue of block chain. The block chain is a new application mode of computer technology such as distributed data storage, peer-to-peer transmission, a consensus mechanism, an encryption algorithm, or the like. In an example, a plurality of servers may form a block chain. The servers are nodes on the block chain. Each node of the block chain may have information connection, and information transmission may be performed between the nodes through the information connection. Data (for example, an image denoising model, an image enhancement model, and an enhanced face image) related to the image enhancement method according to the embodiments of the invention may be stored in the block chain.

In some embodiments, the terminal or the server may implement the image enhancement method according to the embodiments of the invention by executing various computer-executable instructions or computer programs. For example, the computer-executable instructions may be a microprogram-level command, machine instructions, or software instructions. The computer program may be an original program or a software module in an operating system, The computer program may be a native application (APP), which can only be run after being installed in the operating system, or may be a mini program that can be embedded into any APP, i.e. a program that only needs to be downloaded into a browser environment to run. In a word, the above computer-executable instruction may be any form of instruction, and the above computer program can be any form of application program, module, or plug-in.

The following describes an electronic device according to an embodiment of the invention, for implementing an image enhancement method. FIG. 2 is a schematic structural diagram of an electronic device according to an embodiment of the invention. The electronic device 500 according to this embodiment of the invention may be a terminal or a server. As shown in FIG. 2, the electronic device 500 may include: at least one processor 510, a memory 550, at least one network interface 520, and a user interface 530. The components in the electronic device 500 are coupled together by using a bus system 540. The bus system 540 is configured to implement connection and communication between the components. In addition to a data bus, the bus system 540 further includes a power bus, a control bus, and a state signal bus. However, for clarity of description, all types of buses in FIG. 2 are marked as the bus system 540.

In some embodiments, an image enhancement apparatus according to an embodiment of the invention may be implemented in a software mode. FIG. 2 shows an image enhancement apparatus 555 stored in the memory 550. The apparatus 555 may be software in the form of a program, a plug-in, or the like, and includes the following software modules: an obtaining module 5551, an extraction module 5552, a denoising module 5553, and a reconstruction module 5554. These modules are logical and therefore can be combined or further divided according to functions to be implemented. The functions of the modules will be described below.

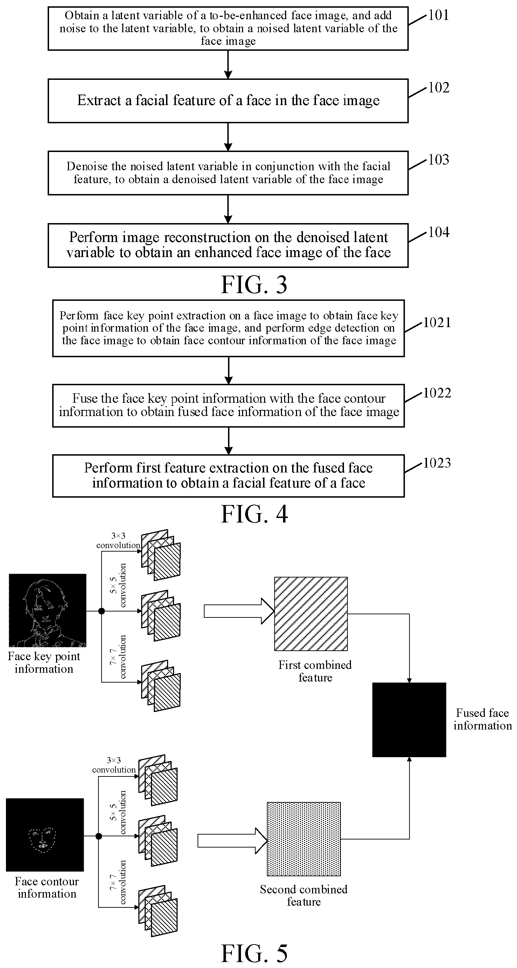

The following describes an image enhancement method according to an embodiment of the invention. As mentioned above, the image enhancement method according to this embodiment of the invention may be implemented by a server or a terminal separately, or may be implemented by a server and a terminal synergistically. Therefore, an executive body of operations is not repeatedly described below. FIG. 3 is a flowchart of an image enhancement method according to an embodiment of the invention. The image enhancement method according to this embodiment of the invention includes:

Operation 101: Obtain a latent variable of a face image (i.e., a to-be-enhanced face image), and add noise to the latent variable, to obtain a noised latent variable of the face image.

The face image is an image of a face of a target object.

In operation 101, when image enhancement is performed on the face image, the latent variable of the face image may be first obtained. For example, the face image may be encoded to obtain the latent variable of the face image. Herein, the encoding process may be implemented through an encoder. The encoding process is a downsampling process. That is, the face image is encoded by downsampling the face image, to obtain the latent variable of the face image. After the latent variable of the face image is obtained, the noise is added to the latent variable to obtain the noised latent variable of the face image. For example, the noise may be obtained by sampling a target distribution. The target distribution includes a plurality of pieces of random data that conforms to a particular data distribution type (for example, normal distribution, standard normal distribution, or uniform distribution), and the random data that conforms to the particular data distribution type may be generated based on a random data generation algorithm. For example, the noise may be Gaussian noise, Poisson noise, salt and pepper noise, white Gaussian noise, or the like. The Gaussian noise is taken as an example. Random data that conforms to Gaussian distribution may be generated through the random data generation algorithm. Then a target random number that conforms to the Gaussian distribution is obtained by sampling the random data that conforms to the Gaussian distribution, and the target random number that conforms to the Gaussian distribution is used as the noise.

Herein, the face image is an image of a face of a target object. The target object may be a virtual object, such as a virtual character, a virtual animal, a virtual animation character, or a virtual game character. The target object may alternatively be a real object, such as a real person or item. The face image may be obtained by performing face recognition on an object image of the target object. For example, face detection is performed on the object image, so that a face region in the object image is determined. The face region is cut out from the object image, to obtain the face image. The face image is an image requiring image enhancement. An image enhancement process is a process of performing content refinement on image content. For example, the face image may be a face sketch (for example, a face sketch of a game character designed in arts). By performing image enhancement on the face sketch, content refinement may be performed on the face sketch.

Operation 102: Extract a facial feature of a face from the face image.

Operation 103: Denoise the noised latent variable using the facial feature, to obtain a denoised latent variable of the face image.

In operation 102, the facial feature of the face may be extracted from the face image. In operation 103, the denoised latent variable may be denoised in conjunction with the facial feature, to obtain the denoised latent variable of the face image, thus controlling the denoising process of the denoised latent variable through the facial feature of the face image.

In some embodiments, the facial feature may be extracted by the following mode: performing face key point extraction on the face image to obtain face key point information of the face image, and performing second feature extraction on the face key point information to obtain a facial feature of the face; or performing edge detection on the face image to obtain face contour information of the face image, and performing third feature extraction on the face contour information to obtain a facial feature of the face; or performing facial element extraction on the face image to obtain facial element information of the face image, and performing fourth feature extraction on the facial element information to obtain the facial feature of the face.

Herein, the facial feature may be at least one of the following features: a face key point feature extracted from the face key point information, a face contour feature extracted from the face contour information, and a facial element feature extracted from the facial element information. Herein, the facial element information includes, but is not limited to, the skin, hairs, color, style, textures, and light and shadow of the face.

In actual application, the face key point information may be extracted through a face key point detection technology (also referred to as face key point positioning or face alignment). That is, a face image is provided, and key regions of a face are positioned, including the eyebrows, the eyes, the nose, the mouth, the face contour, and the like. For example, a 68-point marking solution may be used to divide face key points into inner key points and contour key points. The inner key points include totally 51 key points such as the eyebrows, the eyes, the nose, and the mouth, and the contour key points include 17 key points. The face contour information may be extracted by using an edge detection algorithm such as Canny. The facial element feature may be extracted through a facial element extraction model. Alternatively, the face image may be directly encoded to obtain an encoding result, and the encoding result is used as the facial element feature.

In this way, the noised latent variable may be denoised in conjunction with the facial feature (including at least one of the face key point feature extracted from the face key point information, the face contour feature extracted from the face contour information, and the facial element feature extracted from the facial element information), to obtain the denoised latent variable of the face image. In this way, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and improves the image enhancement effect on the face image.

In some embodiments, the facial feature may be extracted through cascaded M first encoding layers, M being an integer greater than 0. The extraction process of the facial feature includes: encoding the face image by invoking a 1-st first encoding layer in the M first encoding layers, to obtain a facial feature outputted by the 1-st first encoding layer; encoding, by invoking an i-th first encoding layer in the M first encoding layers, a facial feature outputted by an (i-1)-th first encoding layer, to obtain a facial feature outputted by the i-th first encoding layer; and traversing the i to obtain the facial feature outputted by each of the M first encoding layers, i being an integer greater than 0 and not greater than M. In this way, M facial features are extracted through the M first encoding layers, so that the facial features can be extracted more comprehensively and accurately, and the feature expression capability of the facial features is improved, thereby enhancing an effect of the enhanced face image subsequently obtained based on the facial features, namely, enhancing the image enhancement effect.

Based on this, the above denoising process may be implemented through a first image denoising model. The first image denoising model includes a first encoder and a first decoder. The first decoder includes cascaded M first decoding layers. The first decoding layers and the first encoding layers are in one-to-one correspondence. The denoising process includes: encoding the noised latent variable by invoking the first encoder, to obtain an encoded latent variable; decoding, by invoking an M-th first decoding layer in the M first decoding layers, the encoded latent variable and a facial feature outputted by an M-th first encoding layer, to obtain a decoded latent variable outputted by the M-th first decoding layer; decoding, by invoking an i-th first decoding layer in the M first decoding layers, a decoded latent variable outputted by an (i+1)-th first decoding layer and the facial feature outputted by the i-th first encoding layer, to obtain a decoded latent variable outputted by the i-th first decoding layer; and traversing the i to obtain a decoded latent variable outputted by a 1-st first decoding layer in the M first decoding layers, and using the decoded latent variable outputted by the 1-st first decoding layer as the denoised latent variable. In this way, with reference to the facial feature outputted by each first encoding layer, the noised latent variable is denoised through the M first decoding layers, which not only keeps the facial features of the face image more comprehensively and accurately, but also enhances a denoising effect on the noised latent variable, thereby improving the image enhancement effect.

In some embodiments, the facial feature may be extracted from the fused face information of the face key point information and the face contour information, to ensure that the facial feature can represent both the face key point feature and the face contour feature. Based on this, the facial feature may alternatively be referred to as a facial structure feature. Herein, referring to FIG. 4, operation 102 shown in FIG. 3 may be implemented through operation 1021 to operation 1023 shown in FIG. 4: Operation 1021: Perform face key point extraction on the face image to obtain face key point information of the face image, and perform edge detection on the face image to obtain face contour information of the face image. Operation 1022: Fuse the face key point information with the face contour information to obtain fused face information of the face image. Operation 1023: Perform first feature extraction on the fused face information to obtain the facial feature of the face.

Herein, the face key point information and the face contour information in operation 1021 may be extracted by using the extraction mode explained above for the face key point information and the face contour information, and details will be omitted herein. In operation 1022, the face key point information is fused with the face contour information to obtain the fused face information. In some embodiments, operation 1022 may be implemented by the following operations; performing convolution at a plurality of different scales on the face key point information to obtain first convolution features at the scales, and combining the first convolution features at the scales, to obtain a first combined feature; performing convolution at a plurality of different scales on the face contour information to obtain second convolution features at the scales, and combining the second convolution features at the scales, to obtain a second combined feature; and stitching the first combined feature with the second combined feature to obtain a first stitched feature, and using the first stitched feature as the fused face information of the face image.

In the process of implementing operation 1022, a scale for the convolution of the face key point information and a scale of the convolution of the face contour information may be the same or different. An example is used, in which the scales are the same. Referring to FIG. 5, the scales of convolution are respectively 3x3, 5x5, and 7x7. Herein, the convolution at the scales is performed on the face key point information to obtain the first convolution features at the scales, and the first convolution features at the scales are combined to obtain the first combined feature. The convolution at the scales is performed on the face contour information to obtain the second convolution features at the scales, and the second convolution features at the scales are combined to obtain the second combined feature. Finally, the first combined feature and the second combined feature are stitched to obtain the first stitched feature. The first stitched feature is the fused face information obtained by fusing the face key point information with the face contour information. In actual application, the first convolution feature and the second convolution feature may both be in a form of a feature map. The first convolution feature and the second convolution feature may be combined according to a feature channel dimension of the feature map, or may be stitched according to the feature channel dimension of the feature map. In this way, through the convolution at the plurality of different scales, features at the plurality of different scales can be extracted from face contour information and the face key point information. Further, by combining the features at the plurality of different scales, the feature expression capability of the finally obtained facial features is improved, so that the facial features are more comprehensive and accurate. This enhances an effect of the enhanced face image subsequently obtained based on the facial features. That is, this enhances the image enhancement effect.

In operation 1023, the first feature extraction process may be implemented through the cascaded M first encoding layers, M being an integer greater than 0. Based on this, the first feature extraction process includes: encoding the fused face information by invoking a 1-st first encoding layer in the M first encoding layers, to obtain a facial feature of the face that is outputted by the 1-st first encoding layer; encoding, by invoking an i-th first encoding layer in the M first encoding layers, a facial feature outputted by an (i-1)-th first encoding layer, to obtain a facial feature of the face that is outputted by the i-th first encoding layer; and traversing the i to obtain the facial feature of the face that is outputted by each of the M first encoding layers, i being an integer greater than 0 and not greater than M. Herein, i may start from 1 until M. In the traversing process, i is increased by 1 each time.

Herein, the first encoding layer plays a role of downsampling, and the encoding process is a downsampling process. The first encoding layer may include a convolutional layer and a self-attention layer. For example, when the 1-st first encoding layer encodes the fused face information, self-attention processing may be first performed on the fused face information to obtain a self-attention result, and then convolution is performed on the self-attention result to obtain the facial feature of the face that is outputted by the 1-st first encoding layer. For another example, when the i-th first encoding layer performs encoding, self-attention processing may be first performed on the facial feature outputted by the (i-1)-th first encoding layer, to obtain a self-attention result, and then convolution is performed on the self-attention result to obtain the facial feature of the face that is outputted by the i-th first encoding layer. In actual implementation, the cascaded M first encoding layers form a feature extraction model. For example, the feature extraction model may be a controlnet model. In this way, the feature extraction is performed on the fused face information through the cascaded M first encoding layers, thus extracting the facial feature outputted by each of the M first encoding layers, namely, obtaining M facial features.

In some embodiments, a feature size of the facial features outputted by each first encoding layer may be different. For example, the feature sizes of the facial features outputted by the 1-st first encoding layer to the M-th first encoding layer gradually increase. In this way, different feature sizes indicate that different first encoding layers focus on different feature extraction ranges (receptive fields) during facial feature extraction. In this way, the M facial features that can be extracted can more precisely and comprehensively express the facial features, so that when the noised latent variable is denoised in conjunction with the facial features, loss of the facial features of the face image can be reduced in the denoising process, and the finally obtained enhanced face image can keep the facial features of the face image more comprehensively and accurately, thereby enhancing the image enhancement effect on the face image.

In some embodiments, the denoising process is implemented through a first image denoising model. The first image denoising model includes a first encoder and a first decoder. The first decoder includes cascaded M first decoding layers. The first decoding layers and the first encoding layers are in one-to-one correspondence. Based on this, the denoising process includes: encoding the noised latent variable by invoking the first encoder, to obtain an encoded latent variable; decoding, by invoking an M-th first decoding layer in the M first decoding layers, the encoded latent variable and a facial feature outputted by an M-th first encoding layer, to obtain a decoded latent variable outputted by the M-th first decoding layer; decoding, by invoking an i-th first decoding layer in the M first decoding layers, a decoded latent variable outputted by an (i+1)-th first decoding layer and the facial feature outputted by the i-th first encoding layer, to obtain a decoded latent variable outputted by the i-th first decoding layer; and traversing the i to obtain a decoded latent variable outputted by a 1-st first decoding layer in the M first decoding layers, and using the decoded latent variable outputted by the 1-st first decoding layer as the denoised latent variable. Herein, i may start from M until 1. In the traversing process, i is decreased by 1 each time.

Herein, the first image denoising model used for denoising includes the first encoder and the first decoder composed of the M first decoding layers. Each of the M first decoding layers is configured for denoising the noised latent variable using the facial feature outputted by each of the M first encoding layers. Details will be explained below.

First, the noised latent variable is encoded by invoking the first encoder, to obtain an encoded latent variable. In some embodiments, the first encoder includes cascaded P third encoding layers, P being an integer greater than 0. Based on this, the process of encoding the noised latent variable by invoking the first encoder includes: encoding the noised latent variable by invoking a 1-st third encoding layer in the P third encoding layers, to obtain an encoding result outputted by the 1-st third encoding layer; encoding, by invoking a p-th third encoding layer in the P third encoding layers, an encoding result outputted by a (p-1)-th third encoding layer, to obtain an encoding result outputted by the p-th third encoding layer; traversing the p to obtain an encoding result outputted by a P-th third encoding layer, p being an integer greater than 0 and not greater than P; and using the encoding result outputted by the P-th third encoding layer as the encoded latent variable. Herein, each third encoding layer includes a convolutional layer and a self-attention layer. Based on this, convolution is performed on the noised latent variable by invoking the convolutional layer of the 1-st third encoding layer, to obtain a convolution feature, and then self-attention processing is performed on the convolution feature by invoking the self-attention layer of the 1-st third encoding layer, to obtain the encoding result outputted by the 1-st third encoding layer. Convolution is performed, by invoking the convolutional layer of the p-th third encoding layer, on the encoding result outputted by the (p-1)-th third encoding layer, to obtain the convolution feature. Then, self-attention processing is performed on the convolution feature by invoking the self-attention layer of the 1-st third encoding layer, to obtain the encoding result outputted by the p-th third encoding layer. In this way, by encoding the noised latent variable at least once through at least one third encoding layer, more detailed features can be extracted, thereby improving the encoding effect of the first encoder and providing more detailed features for subsequent processing.

Then, the encoded latent variable and the facial feature outputted by the M-th first encoding layer are decoded by invoking the M-th first decoding layer in the M first decoding layers, to obtain the decoded latent variable outputted by the M-th first decoding layer. The decoded latent variable outputted by the (i+1)-th first decoding layer and the facial feature outputted by the i-th first encoding layer are decoded by invoking the i-th first decoding layer in the M first decoding layers, to obtain the decoded latent variable outputted by the i-th first decoding layer. The i is traversed to obtain the decoded latent variable outputted by the 1-st first decoding layer in the M first decoding layers, and the decoded latent variable outputted by the 1-st first decoding layer is used as the denoised latent variable. In this way, with reference to the facial feature outputted by each first encoding layer, the noised latent variable is denoised through the M first decoding layers, which not only keeps the facial features of the face image more comprehensively and accurately, but also improves a denoising effect on the noised latent variable, thereby improving the image enhancement effect.

In some embodiments, a size of inputted data of each of the M first decoding layers may be different. For example, a size of inputted data of the i-th first decoding layer may be equal to the feature size of the facial feature outputted by the i-th first encoding layer. In this way, it can be ensured that the first decoding layers can quickly and accurately process the facial features outputted by the first encoding layers, thereby improving the processing efficiency and processing accuracy of the first decoding layer.

In some embodiments, the first decoding layer includes a convolutional layer and a self-attention layer. For example, convolution is performed, by invoking the convolutional layer of the M-th first decoding layer, on the encoded latent variable and the facial feature outputted by the M-th first encoding layer, to obtain a convolution feature of the M-th layer. Then, self-attention processing is performed on the convolution feature of the M-th layer by invoking the self-attention layer of the M-th first decoding layer, to obtain a decoded latent variable outputted by the M-th first decoding layer. Convolution is performed on the decoded latent variable outputted by the (i+1)-th first decoding layer and the facial feature outputted by the i-th first encoding layer by invoking the convolutional layer of the i-th first decoding layer, to obtain a convolution feature of the i-th layer. Self-attention processing is performed on the convolution feature of the i-th layer by invoking the self-attention layer of the i-th first decoding layer, to obtain the decoded latent variable outputted by the i-th first decoding layer. In this way, more detailed features are extracted through the convolution. High-value features are quickly selected through the self-attention layers, thereby improving quality of the decoded latent variable outputted by each first decoding layer, enhancing a denoising effect on the noised latent variable, and further enhancing the image enhancement effect.

In some embodiments, by the following mode, the encoded latent variable and the facial feature outputted by the M-th first encoding layer may be decoded to obtain the decoded latent variable outputted by the M-th first decoding layer: calculating, based on a first weight value of the encoded latent variable and a second weight value of the facial feature outputted by the M-th first encoding layer, a weighted sum of the encoded latent variable and the facial feature outputted by the M-th first encoding layer, to obtain a second stitched feature; and decoding the second stitched feature to obtain the decoded latent variable outputted by the M-th first decoding layer. Correspondingly, by the following mode, the decoded latent variable outputted by an (i+1)-th first decoding layer and the facial feature outputted by the i-th first encoding layer may be decoded to obtain the decoded latent variable outputted by the i-th first decoding layer: calculating, based on a third weight value of the decoded latent variable outputted by the (i+1)-th first decoding layer and a fourth weight value of the facial feature outputted by the i-th first encoding layer, a weighted sum of the decoded latent variable outputted by the (i+1)-th first decoding layer and the facial feature outputted by the i-th first encoding layer, to obtain a third stitched feature; and decoding the third stitched feature to obtain the decoded latent variable outputted by the i-th first decoding layer.

Herein, the first weight value, the second weight value, the third weight value, and the fourth weight value may be set in advance. In actual implementation, they may further be adjusted according to an actual situation. In this way, in the process of denoising the noised latent variable, control of the facial feature is added, and impact of the facial feature on a denoising effect may be controlled through a weight value set for the facial feature, thereby improving flexibility of the impact of the facial feature on the denoising process, and a user may set the impact according to a need.

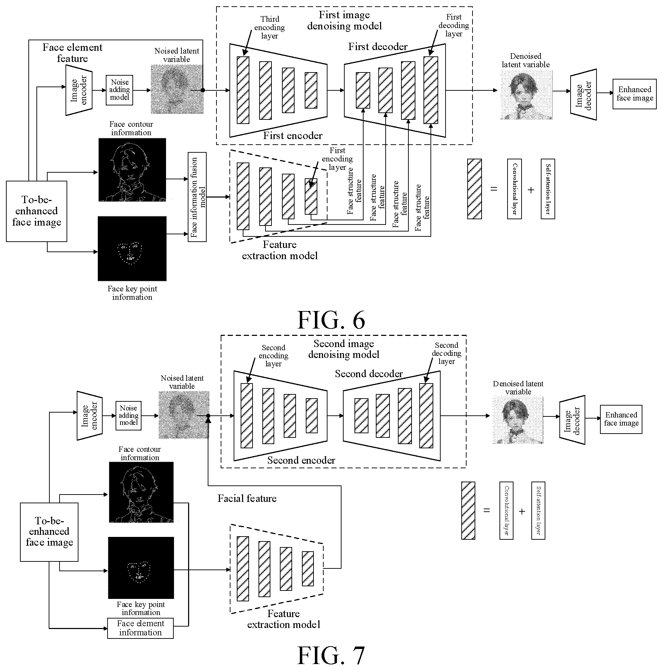

In an example, referring to FIG. 6, the image enhancement model includes a feature extraction model (such as a controlnet model), a first image denoising model, a noise adding model, a face information fusion model, an image encoder, and an image decoder. The first image denoising model is actually a Unet model, and includes a first encoder of Unet and a first decoder of Unet. The feature extraction model includes cascaded M first encoding layers. The first decoder includes cascaded M first decoding layers. The first decoding layers and the first encoding layers are in one-to-one correspondence.

In this way, based on the image enhancement model shown in FIG. 6, 1) a to-be-enhanced face image is encoded by invoking the image encoder, to obtain a latent variable. 2) Noise is added to the latent variable by invoking the noise adding model, to obtain a noised latent variable. 3) Face key point information is fused with face contour information by invoking the face information fusion model, to obtain fused face information. 4) A facial structure feature is extracted by invoking the feature extraction model (including the cascaded M first encoding layers): encoding the fused face information by invoking a 1-st first encoding layer in the M first encoding layers, to obtain a facial structure feature that is outputted by the 1-st first encoding layer; encoding, by invoking an i-th first encoding layer in the M first encoding layers, a facial feature outputted by an (i-1)-th first encoding layer, to obtain a facial structure feature outputted by the i-th first encoding layer; and traversing the i to obtain the facial structure feature outputted by each of the M first encoding layers. 5) The noised latent variable is encoded by invoking the first encoder, to obtain an encoded latent variable. 6) The encoded latent variable and a facial feature outputted by an M-th first encoding layer are decoded by invoking an M-th first decoding layer in the M first decoding layers, to obtain a decoded latent variable outputted by the M-th first decoding layer. A decoded latent variable outputted by an (i+1)-th first decoding layer and the facial feature outputted by the i-th first encoding layer are decoded by invoking an i-th first decoding layer in the M first decoding layers, to obtain a decoded latent variable outputted by the i-th first decoding layer. The i is traversed to obtain a decoded latent variable outputted by a 1-st first decoding layer in the M first decoding layers, and the decoded latent variable outputted by the 1-st first decoding layer is used as a denoised latent variable obtained by denoising the noised latent variable. 7) The denoised latent variable is decoded by invoking the image decoder, to obtain an enhanced face image of the face image.

According to the above embodiment, in the image enhancement process of the face image, by denoising the noised latent variable, control of the facial feature (i.e., the facial structure feature extracted from the fused face information of the face key point information and the face contour information) of the face image is added. That is, the noised latent variable is denoised in conjunction with the facial structure feature, so that loss of the facial structure feature of the face image can be reduced in the denoising process, which causes the finally obtained enhanced face image to keep more facial structure features of the face image and enhances the image enhancement effect on the face image.

In some embodiments, the above facial feature extracted from the fused face information through the first feature extraction operation is a facial structure feature. After the facial structure feature of the face in the face image is extracted, a facial element feature of the face in the face image may further be extracted. Based on this, by the following mode, the noised latent variable may be encoded to obtain the encoded latent variable: encoding the noised latent variable using the facial element feature to obtain the encoded latent variable.

Herein, the facial feature extracted from the fused face information is the facial structure feature. Therefore, the facial element feature of the face in the face image may further be added. Thus, the noised latent variable may be encoded in conjunction with the facial element feature. To be specific: The facial element feature and the noised latent variable are stitched to obtain a target stitched feature, and then the target stitched feature is encoded to obtain the encoded latent variable. Specifically, the first encoder includes cascaded P third encoding layers, P being an integer greater than 0. Based on this, the encoding the noised latent variable in conjunction with the facial element feature to obtain the encoded latent variable includes: stitching the facial element feature with the noised latent variable to obtain a target stitched feature for a 1-st third encoding layer, and encoding the target stitched feature for the 1-st third encoding layer by invoking the 1-st third encoding layer in the P third encoding layers, to obtain an encoding result outputted by the 1-st third encoding layer; stitching the facial element feature with an encoding result outputted by a (p-1)-th third encoding layer to obtain a target stitched feature for a p-th third encoding layer, and encoding the target stitched feature for the p-th third encoding layer by invoking the p-th third encoding layer in the P third encoding layers, to obtain an encoding result outputted by the p-th third encoding layer; traversing the p to obtain an encoding result outputted by a P-th third encoding layer, p being an integer greater than 0 and not greater than P; and using the encoding result outputted by the P-th third encoding layer as the encoded latent variable.

In this way, for the denoising of the noised latent variable, control of the facial element features is further added based on the control of the facial structure feature, which can further reduce loss of the facial feature in the denoising process, so that the finally obtained enhanced face image keeps more facial features of the face image, and the image enhancement effect on the face image is enhanced

Herein, the noised latent variable is encoded to obtain the encoded latent variable through the first encoder. Still referring to FIG. 6, the first encoder includes cascaded P third encoding layers, P being an integer greater than 0. Each third encoding layer includes a self-attention layer. Based on this, the process of encoding the noised latent variable by invoking the first encoder includes: stitching the noised latent variable with the facial element feature to obtain a sixth stitched feature; performing self-attention processing on the sixth stitched feature by invoking a 1-st third encoding layer in the P third encoding layers, to obtain a 1-st self-attention result, and encoding the 1-st self-attention result to obtain an encoding result outputted by the 1-st third encoding layer; stitching an encoding result outputted by a (p-1)-th third encoding layer with the facial element feature to obtain a seventh stitched feature; performing self-attention processing on the seventh stitched feature by invoking a p-st third encoding layer in the P third encoding layers, to obtain a p-st self-attention result, and encoding the p-st self-attention result to obtain an encoding result outputted by the p-st third encoding layer; traversing the p to obtain an encoding result outputted by a P-th third encoding layer, p being an integer greater than 0 and not greater than P; and using the encoding result outputted by the P-th third encoding layer as the encoded latent variable. In some embodiments, each third encoding layer may further include a convolutional layer. A processing operation of the convolutional layer may be performed before a processing operation of the self-attention layer. For example, for the 1-st third encoding layer, convolution is performed on the sixth stitched feature through the convolutional layer, and then a convolution result of the convolutional layer is processed through the self-attention layer.

Herein, the facial element feature may be obtained by encoding the face image through the first encoder. The facial element feature is configured for representing the features such as the skin, hairs, color, style, textures, and light and shadow of the face image. P may be equal to M. For example, P and M shown in FIG. 6 are both 4. The third encoding layers and the first decoding layers respectively include convolutional layers and self-attention layers. There are P third encoding layers. Each third encoding layer includes a corresponding self-attention layer for self-attention processing. In actual application, control of the facial element feature may be added only to some of the P third encoding layers (for example, the facial element feature may be stitched before the self-attention processing), to reduce a calculation amount of the self-attention processing, improve calculation efficiency, and reduce occupation of calculation resources. Certainly, if calculation resources are sufficient, control of the facial element feature may alternatively be added to each of the P third encoding layers (for example, the facial element feature may be stitched before the self-attention processing), to enhance the image enhancement effect.

According to the above embodiment, in the image enhancement process of the face image, by denoising the noised latent variable, in addition to the control of the facial feature (i.e., the facial structure feature extracted from the fused face information of the face key point information and the face contour information), the facial element feature (configured for representing the skin, hairs, color, style, textures, light and shadow, and the like of the face image) is further added. That is, the noised latent variable is denoised in conjunction with the facial structure feature and the facial element feature, thereby reducing loss of the facial structure feature and facial element feature of the face image, which causes the finally obtained enhanced face image to keep more facial structure features of the face image and also keep rich facial element features, making elements such as the skin, the hairs, the color, the style, the textures, and the light and shadow more lifelike and more natural. This further enhances the image enhancement effect on the face image.

In some embodiments, the denoising process is implemented through a second image denoising model. The second image denoising model includes a second encoder and a second decoder. The second encoder includes cascaded N second encoding layers, and N is an integer greater than 0. Based on this, the denoising the noised latent variable in conjunction with the facial feature, to obtain a denoised latent variable includes: stitching the noised latent variable with the facial feature to obtain a fourth stitched feature; performing self-attention processing on the fourth stitched feature by invoking a 1-st second encoding layer in the N second encoding layers, to obtain a 1-st self-attention result, and encoding the 1-st self-attention result to obtain an encoding result outputted by the 1-st second encoding layer; stitching an encoding result outputted by a (j-1)-th second encoding layer with the facial feature to obtain a fifth stitched feature; performing self-attention processing on the fifth stitched feature by invoking a j-th second encoding layer in the N second encoding layers, to obtain a j-th self-attention result, and encoding the j-th self-attention result to obtain an encoding result outputted by the j-th second encoding layer; traversing the j to obtain an encoding result outputted by an N-th second encoding layer, j being an integer greater than 0 and not greater than N; and decoding the encoding result outputted by the N-th second encoding layer to obtain the denoised latent variable.

Herein, the facial feature may include at least one of the following features: a face key point feature extracted from the face key point information, a face contour feature extracted from the face contour information, and a facial element feature extracted from the facial element information. There are N second encoding layers. Each second encoding layer includes a corresponding self-attention layer for self-attention processing. In actual application, control of the facial feature may be added only to some of the N second encoding layers (for example, the facial feature may be stitched before the self-attention processing), to reduce a calculation amount of the self-attention processing, improve calculation efficiency, and reduce occupation of calculation resources. Certainly, if calculation resources are sufficient, control of the facial feature may be added to each of the N second encoding layers (for example, the facial feature may be stitched before the self-attention processing).

In an example, referring to FIG. 7, the image enhancement model includes a feature extraction model, a second image denoising model, a noise adding model, an image encoder, and an image decoder. The second image denoising model is actually a Unet model, and includes a second encoder of Unet and a second decoder of Unet. The second encoder includes cascaded N second encoding layers.

In this way, based on the image enhancement model shown in FIG. 7, 1) a to-be-enhanced face image is encoded by invoking the image encoder, to obtain a latent variable. 2) Noise is added to the latent variable by invoking the noise adding model, to obtain a noised latent variable. 3) Feature extraction is performed on the face image by invoking the feature extraction model, to obtain a facial feature. 4) The noised latent variable is stitched with the facial feature to obtain a fourth stitched feature. Self-attention processing is performed on the fourth stitched feature by invoking a 1-st second encoding layer in the N second encoding layers, to obtain a 1-st self-attention result, and the 1-st self-attention result is encoded to obtain an encoding result outputted by the 1-st second encoding layer. An encoding result outputted by a (j-1)-th second encoding layer is stitched with the facial feature to obtain a fifth stitched feature. Self-attention processing is performed on the fifth stitched feature by invoking a j-th second encoding layer in the N second encoding layers, to obtain a j-th self-attention result, and the j-th self-attention result is encoded to obtain an encoding result outputted by the j-th second encoding layer. The j is traversed to obtain an encoding result outputted by an N-th second encoding layer. 5) The encoding result outputted by the N-th second encoding layer is decoded to obtain a denoised latent variable. 6) The denoised latent variable is decoded by invoking the image decoder, to obtain an enhanced face image of the face image. Herein, j may start from 1 until N. In the traversing process, j is increased by 1 each time.

According to the above embodiment, in the image enhancement process of the face image, by denoising the noised latent variable, control of the facial feature (for example, which may include the facial structure feature extracted from the fused face information of the face key point information and the face contour information, and may further include the facial element feature, such as the skin, hairs, color, style, textures, and light and shadow, for representing the face image) of the face image is added. That is, the noised latent variable is denoised in conjunction with the facial feature, so that loss of the facial feature of the face image can be reduced, which causes the finally obtained enhanced face image to keep more facial features of the face image and enhances the image enhancement effect on the face image.

In actual application, the image enhancement model may be an image-generation-based diffusion model, such as a stable diffusion model or a deepfloy _ if model. The image denoising model may be a Unet-based denoising Unet model.

In some embodiments, the above denoising process may include T rounds of denoising, T being an integer greater than 0. Based on this, by the following mode, the noised latent variable may be denoised using the facial feature, to obtain the denoised latent variable of the face image: performing a 1-st round of denoising on the noised latent variable using the facial feature, to obtain an intermediate denoised latent variable outputted by the 1-st round of denoising; performing, using the facial feature, a t-th round of denoising on an intermediate denoised latent variable outputted by a (t-1)-th round of denoising, to obtain an intermediate denoised latent variable outputted by the t-th round of denoising; and traversing the t to obtain an intermediate denoised latent variable outputted by a T-th round of denoising, and using the intermediate denoised latent variable outputted by the T-th round of denoising as the denoised latent variable of the face image. Herein, t may start from 1 until T. In the traversing process, t is increased by 1 each time.

Herein, the noise adding process in this embodiment of the invention is a forward diffusion process. That is, the noise is gradually added to the latent variable until the noised latent variable is obtained. The denoising process is a reverse diffusion process. That is, the noise is gradually removed by performing the T rounds of denoising on the noised latent variable, thus obtaining the denoised latent variable. The T rounds of denoising may be understood as denoising in T time steps, and denoising is completed once in each time step. Each denoising process may be implemented by using the denoising logic provided in the above embodiment. In this way, the denoising effect on the noised latent variable can be enhanced, so that the obtained denoised latent variable keeps original features of the face image as much as possible, thereby enhancing the image enhancement effect on the face image.

Operation 104: Perform image reconstruction on the denoised latent variable to obtain an enhanced face image of the face image.

In operation 104, the image reconstruction process is decoding the denoised latent variable to obtain the enhanced face image of the face image. The decoding process may be implemented through a decoder. The decoding process is an upsampling process.

In some embodiments, after the image reconstruction is performed on the denoised latent variable to obtain the enhanced face image of the face image, image super-resolution may further be performed on the enhanced face image, to obtain a super-resolution face image. The super-resolution face image is divided into a plurality of image blocks. Image enhancement is respectively performed on the image blocks, to obtain enhanced image blocks of the image blocks. The enhanced image blocks are stitched to obtain a target enhanced face image of the face image.

Herein, image super-resolution (ISR) is a computer vision technology, and aims to reconstruct a high-definition image with a higher resolution from a low-resolution image. This technology is widely applied to fields such as image restoration, video processing, medical imaging, satellite image analysis, and augmented reality. A basic concept of the image super-resolution is to estimate a pixel value at a high resolution by analyzing features and modes in the low-resolution image. For example, the image super-resolution may implement 2x super-resolution on an image through a real enhanced super-resolution generative adversarial network (R-ESRGAN) model. The image super-resolution is performed on the enhanced face image to obtain the super-resolution face image. Since the image super-resolution does not add details, but only enlarges the original image, some originally blurred details may become blurrier. Therefore, the image enhancement may further be locally performed on an image to improve quality and add details. Specifically, the super-resolution face image is divided into a plurality of image blocks (each image block is a tile), and then the image enhancement is respectively performed on the image blocks, to obtain the enhanced image blocks of the image blocks, so that the enhanced image blocks are stitched to obtain the target enhanced face image of the face image. For the image enhancement process of the image blocks, refer to the image enhancement process of the face image, and details will be omitted herein. In this way, the image resolution of the enhanced face image is improved through the image super-resolution. In addition, the local image enhancement is respectively performed on each image block while improving the image resolution, thereby further enhancing the image enhancement effect.

In some embodiments, before the latent variable of the to-be-enhanced face image is obtained, a target face image of the target object may be obtained. Size adjustment is performed on the target face image based on a plurality of different sizes, to obtain adjusted images with the sizes. The adjusted images with the sizes are respectively used as the face image. Herein, the to-be-enhanced face image is obtained by performing the size adjustment on the target face image based on the plurality of different sizes. The size adjustment may include size reduction and size enlargement. The adjusted images with the plurality of different sizes may include the target face image with an original size. In this way, corresponding image enhancement effects may be achieved on face images with different sizes, and the images with the different sizes have different image enhancement effects in the same image enhancement flow, so that the selectivity of the obtained enhanced face image can be improved.

In some embodiments, the face image belongs to an object image of a target object. That is, the face image is obtained by performing face recognition on the object image of the target object. Therefore, after the image reconstruction is performed on the denoised latent variable to obtain the enhanced face image of the face image, the enhanced face image may further be added to an enhanced object image of the object image, to perfect the enhanced object image. Specifically, this may be implemented through the following process: obtaining an enhanced object image of the object image, and determining a target region, which corresponds to the face image, in the enhanced object image; and replacing the target region with the enhanced face image to obtain a first enhanced image.

Since the image enhancement processes of the face image and the image enhancement process of the object image are separately performed, when the enhanced face image is added to the enhanced object image, distortion misplacement exist at a joint of the two images. Therefore, the distortion misplacement at the joint of the images requires inpainting. The enhanced face image has a plurality of image edges. Therefore, in some embodiments, the first enhanced image may be inpainted through the following mode: respectively generating rectangular target gradient images corresponding to the image edges, a length of a target gradient image being the same as a length of the image edge, brightness of the target gradient image decreasing from a center line to two sides, and a length of the center line being the length of the target gradient image; respectively adding the target gradient image to a target image to obtain an image mask, pixel values of pixels of the target image being 0, and the center lines of the target gradient images in the image mask overlapping the corresponding image edges in the enhanced face image; and inpainting the first enhanced image based on the image mask, to obtain a second enhanced image.

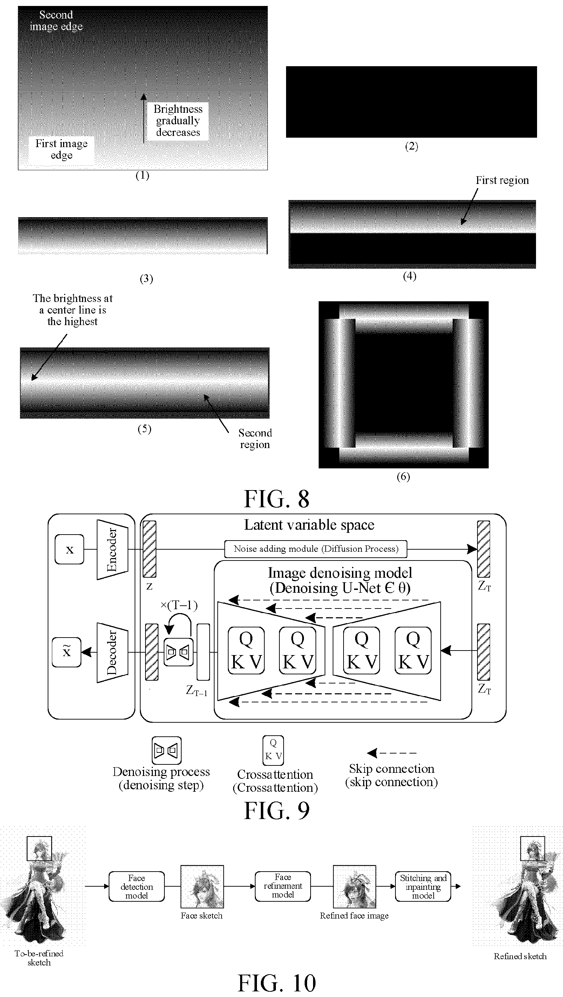

Herein, referring to FIG. 8, for generation of a target gradient image, 1) an initial gradient image having a length that is the same as a length of an image edge of the enhanced face image is generated. Brightness of the initial gradient image gradually decreases from a first image edge to a second image edge. The first image edge and the second image edge are opposite to each other. As shown in FIG. 8(1), if the length of the image edge of the enhanced face image is 256, an initial gradient image of 256*256 is generated. Brightness of the initial gradient image gradually decreases from the first image edge on the bottom to the second image edge on the top until the brightness of the initial gradient image is 0. (2) A full-black intermediate image is generated. A length of the intermediate image may be a length of an edge of the enhanced face image, and a width of the intermediate image may be a width of an image block (tile). As shown in FIG. 8(2), a full-black intermediate image of 256*64 is generated. 3) A rectangular gradient image with a width of tile/2 and a length that is the length of the first image edge is cut out from the first image edge having highest brightness of the initial gradient image. As shown in FIG. 8(3), a rectangular gradient image of 256*32 is obtained. 4) The rectangular gradient image is pasted to a first region of the intermediate image, as shown in FIG. 8(4). 5) The rectangular gradient image is rotated by 180 degrees, and the rectangular gradient image obtained by rotation is pasted to a second region of the intermediate image, to obtain a target gradient image, as shown in FIG. 8(5). The first region and the second region form the intermediate image. In this way, a target gradient image of an image edge is obtained. A length of the target gradient image is the same as the length of the image edge. Brightness of the target gradient image decreases from a center line to two sides, and a length of the center line is the length of the target gradient image.

After the target gradient images of the image edges are obtained, the target gradient images are added to the target image to obtain an image mask, as shown in FIG. 8(6). Herein, since the enhanced face image is square, the target gradient image of only one image edge needs to be calculated, and the target gradient image is respectively applied to the image edges. For the image mask, the center lines of the target gradient images in the image mask overlap the corresponding image edges in the enhanced face image. In this way, the first enhanced image may be inpainted based on the image mask, to obtain the second enhanced image, thereby inpainting the distortion misplacement at the joint of the two images and enhancing an image effect of the second enhanced image.

In an exemplary scene, this embodiment of the invention may be applied to a game design scene, and is specifically applied to a design scene of a virtual object in a game scene. For example, a face image of a virtual object (for example, a face sketch of the virtual object) designed by a game designer is obtained. A latent variable of the face image is then extracted, and noise is added to the latent variable, to obtain a noised latent variable of the face image. A facial feature of a face in the face image is extracted. The noised latent variable is denoised in conjunction with the facial feature, to obtain a denoised latent variable of the face image. Image reconstruction is performed on the denoised latent variable to obtain an enhanced face image of the face image. In this way, in the image enhancement process of the face image, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and enhances an image enhancement effect on the face image and a game design effect. In addition, an automatic image enhancement effect can be achieved, thereby improving game design efficiency.

In an exemplary scene, this embodiment of the invention may be applied to an animation design scene, and is specifically applied to a design scene of an animation object in an animation. For example, a face image of an animation object (for example, a face sketch of the animation object) designed by an animation designer is obtained. A latent variable of the face image is then extracted, and noise is added to the latent variable, to obtain a noised latent variable of the face image. A facial feature of a face in the face image is extracted. The noised latent variable is denoised in conjunction with the facial feature, to obtain a denoised latent variable of the face image. Image reconstruction is performed on the denoised latent variable to obtain an enhanced face image of the face image. In this way, in the image enhancement process of the face image, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and enhances an image enhancement effect on the face image and an animation design effect. In addition, an automatic image enhancement effect can be achieved, thereby improving animation design efficiency.

In an exemplary scene, this embodiment of the invention may be applied to a UGC scene. For example, a face image that is produced by a user and includes a face (for example, a personal photo taken by the user or a face sketch of an object that is designed by the user) is obtained. A latent variable of the face image is then extracted, and noise is added to the latent variable, to obtain a noised latent variable of the face image. A facial feature of a face in the face image is extracted. The noised latent variable is denoised in conjunction with the facial feature, to obtain a denoised latent variable of the face image. Image reconstruction is performed on the denoised latent variable to obtain an enhanced face image of the face image. In this way, in the image enhancement process of the face image, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and enhances an image enhancement effect on the face image and a content generation effect. In addition, an automatic image enhancement effect can be achieved, thereby improving content generation efficiency and improves user stickiness of a UGC platform.

By applying the above embodiments of the invention, a latent variable of a to-be-enhanced face image is first obtained, and noise is added to the latent variable, to obtain a noised latent variable of the face image. Then, a facial feature of a face in the face image is extracted. Thus, the noised latent variable is denoised in conjunction with the facial feature, to obtain a denoised latent variable of the face image. Image reconstruction is performed on the denoised latent variable to obtain an enhanced face image of the face image. Herein, in the image enhancement process of the face image, by denoising the noised latent variable, control of the facial feature of the face image is added, namely, the noised latent variable is denoised in conjunction with the facial feature, so that loss of the facial feature of the face image can be reduced in the denoising process, which causes the finally obtained enhanced face image to keep more facial features of the face image and enhances an image enhancement effect on the face image.

The following describes exemplary application of this embodiment of the invention in an actual application scene by taking image enhancement (or referred to as image refinement) on a face sketch (i.e., a face image).

In artistic designing, designing an object (such as a character or an animal) image usually includes three states: concept setting, sketch design, and sketch refinement. (1) Concept setting stage: A designer makes a preliminary design and conception based on basic requirements and characteristics (for example, features such as the gender, age, and personality of the object) discussed with a customer or a team member for an object image, thus obtaining a preliminary concept setting. (2) Sketch design stage: The designer usually uses a tool such as a sketch tool or a hand drawing tool to make a further design and conception for concept setting, to obtain a corresponding object sketch. (3) Sketch refinement stage: The designer usually performs further rendering and refinement on the object sketch, to obtain a more elaborate and real object image. The designer can make more delicate design and conception for parts of the object, including facial expressions, clothing details, muscle lines, and the like. In the above design flow of the object image, each operation needs manual participation of the designer, leading to low production efficiency of designing an original image. Therefore, the flow may be automated to improve the production efficiency of designing the original image. For example, the sketch refinement stage is automated.

The sketch refinement means that an original image designer adds effects such as details, costumes, and light and shadow to a sketch with a completion degree of 30% to 50% , to obtain a refined image. To make a refinement effect on the object sketch better, the face sketch may be refined separately. In the related art, noise is gradually added to the face image until the face image completely becomes a random noise image. Then, starting from the random noise image, the noise is gradually removed to obtain a final enhanced face image. However, since it is not easy to control the denoising strength in a denoising process, a large number of original features are easily lost in the final enhanced face image. As a result, the enhancement effect on the enhanced face image is poor.

Based on this, an embodiment of the invention provides an image enhancement method, to at least solve the above problems. An embodiment of the invention provides an image enhancement model (i.e., a face refinement model). The image enhancement model is based on an image generative diffusion model. To enhance feature reservation on the face sketch, in this embodiment of the invention, 1) a facial structure feature including face key points and a face contour are added based on the image generation and diffusion model. 2) A facial element feature of the face sketch is added in a self-attention processing process of the image generation and diffusion model. In this way, after a refined face image of the face sketch is obtained, the refined face image and a refined character image (which is obtained by refining a character sketch corresponding to the face sketch) may be seamlessly stitched by image gradient mask stitching and inpainting.

Next, the image generation and diffusion model is described. The image generation and diffusion model is a generation model based on a diffusion process, and is configured for generating a high-quality image with rich textures and details. An image generation process of the image generation and diffusion model is a diffusion process in which noise gradually decreases. In the diffusion process, starting from an original image that contains random noise, the model gradually removes noise of an initial image, to obtain a generated image. The generation process of the image generation and diffusion model includes a forward diffusion process and a reverse diffusion process. The forward diffusion process is that the model gradually adds noise to an original image until the original image completely becomes a random noise image. The reverse diffusion process is that starting from a completely random noise image, the model gradually removes noise to obtain a generated image. In the reverse diffusion process, the model needs to learn how to remove the noise at each time step. Therefore, the model usually uses a neural network structure, such as a convolutional neural network (CNN) or a variable autoencoder (VIE).

For example, FIG. 9 is a schematic structural diagram of an image generation and diffusion model according to an embodiment of the invention. Herein, the image generation and diffusion model is implemented based on a stable diffusion network, and includes an encoder, a decoder, a noise adding module (i.e., a diffusion process), and an image denoising model (constructed based on a Unet such as denoising unet). The encoder is configured to convert an inputted image $x$ into a latent variable (latent representation) $z$. The latent variable may capture an important feature of the inputted image, which helps the model remove noise in a reverse diffusion process. The noise adding module is configured to add noise (for example, white Gaussian noise) to the latent variable to obtain a noised latent variable $z_T$. The image denoising model is configured to denoise the noised latent variable $z_T$ to obtain a denoised latent variable $z_0$. The denoising process is divided into a plurality of time steps. The image denoising model may predict a noise item that needs to be removed at each time step, and remove the corresponding noise at each time step, to sequentially obtain $z_{T-1}$, $z_{T-2}$, ......, $z_1$, and $z_0$. The decoder is configured to perform image reconstruction on the denoised latent variable $z_0$ to obtain a generated image $\bar{x}$. In a model training process, the generated image may be learned by minimizing a reconstruction error. The reconstruction error is calculated according to a difference between the generated image and the original image. By optimizing the reconstruction error, the model may learn to gradually remove the noise in the reverse diffusion process, to finally generate a high-quality image.

For example, referring to FIG. 10, based on the image enhancement method according to this embodiment of the invention, the following processing may be performed on a to-be-refined sketch: (1) Perform face detection on the to-be-refined sketch through a face detection model (such as a facexlib model), to obtain a face sketch. The face sketch may be adjusted to a preset resolution, for example, 1024*1024. (2) Perform face refinement on the face sketch through a face refinement model (i.e., a face enhancement model), to obtain a refined face image. In this way, a face in the face sketch may be automatically modified and rendered, and abundant texture and light and shadow information are added to the face, to obtain the refined face image. (3) The refined face image and a refinement result of another part in the to-be-refined sketch are stitched through a stitching and inpainting model by using a mask inpainting mode, to obtain a refined image of the to-be-refined sketch.

The following describes the image enhancement method according to this embodiment of the invention in detail. (1) The image enhancement method according to this embodiment of the invention may be configured for refining or enhancing content of a face sketch. The face sketch contains a facial structure feature, such as the five sense organs and a face shape, but lacks details and light and shadow effects. Details such as the facial skin, the hairs, and the light and shadow may be enriched through a face refinement model, so that a refined face may be stitched back into a refined character image. (2) In actual application, facial refinement and facial feature reservation are contradictory. The art designer hopes to enrich the content of the face sketch as much as possible, so that elements such as the skin, the light and shadow, and the hairs are as lifelike as possible, but also hopes to reserve the facial features of the original face in the face sketch as much as possible. That is, the face refinement needs to enrich the details, without losing key information. Therefore, a) the face refinement model is required to generate more new elements as much as possible, and b) the face refinement model is required to reserve particular elements, such as the five sense organs and the face shape, in the face sketch as much as possible. (3) The face refinement model is based on an image generation and diffusion model. For example, the image generation and diffusion model may be a stable diffusion model, a deepfloy_if model, or the like.

For example, FIG. 6 is a schematic structural diagram of an image enhancement model according to an embodiment of the invention. The image enhancement model includes a face information fusion model, a feature extraction model (for example, controlnet), and an image generation and diffusion model (for example, a stable diffusion model shown in FIG. 9). Herein, FIG. 6 shows an image denoising model in the image generation and diffusion model. The image denoising model is actually a Unet model, and includes a first encoder of Unet and a first decoder of Unet. The first encoder includes a plurality of encoding layers. Each encoding layer includes a convolutional network and a self-attention network. The first decoder includes a plurality of decoding layers. Each decoding layer also includes a convolutional network and a self-attention network. The feature extraction model includes a plurality of feature extraction layers. Each feature extraction layer also includes a convolutional network and a self-attention network.

Specifically, (1) to add structure control in an image refinement process, a face key point extraction algorithm is used to extract face key point information from a face sketch *x*. In addition, an edge detection algorithm (for example, a Canny edge detection algorithm) is used to extract face contour information from the face sketch *x*.The face key point information and the face contour information are fused through the face information fusion model, to obtain fused face information. Feature extraction is performed on the fused face information through the feature extraction model, to obtain a fused facial feature (i.e., the above facial structure feature). The fused facial feature is inputted to the first decoder of Unet, so that the first decoder of Unet may generate a denoised latent variable $x_0$ in conjunction with the fused facial feature and a multilayer image feature extracted by the first encoder of Unet from a noised latent variable $x_t$ (which is obtained by adding noise to a latent variable of the face sketch *x*), thus generating a refined face image $\bar{x}$ based on the denoised latent variable $x_0$. In this way, the generated refined face image can be affected by the facial structure feature of the face sketch. (2) Supervision of a facial element feature (including color, style, texture, light and shadow, or the like) of the face sketch is added to a self-attention network of Unet, so that when performing self-attention processing, the model further pays attention to the facial element feature, thereby ensuring that face style information in addition to a contour and key points may alternatively be kept in the refined face image generated by denoising. The following makes explanations separately.

(1) Structure control module based on face key point information and face contour information. Basic requirements of face refinement are to ensure that the facial structure feature (including the key points and the contour) in the face sketch is kept in the refined face image, and to supplement richer information such as the textures, the skin, and the light and shadow. To keep the facial structure feature of the face sketch as much as possible, the face key point information and the face contour information of the face sketch are respectively extracted through a pre-trained model. The fused face information of the face key point information and the face contour information is inputted to the feature extraction model (for example, controlnet) to extract the fused facial feature. The fused facial feature is fused, through a multilayer connection mode, with an image feature of the noised face sketch that is extracted by the first encoder of Unet. Since the image generation process is always affected by the facial element feature of the inputted face sketch, the generated refined face image can keep more facial element features of the face sketch.

In actual application, the face key point detection is also referred to as face key point positioning or face alignment), which means that a face image is provided, and key regions of a face are positioned, including the eyebrows, the eyes, the nose, the mouth, the face contour, and the like. For example, a 68-point marking solution may be used to divide face key points into inner key points and contour key points. The inner key points include totally 51 key points such as the eyebrows, the eyes, the nose, and the mouth, and the contour key points include 17 key points. This can be specifically implemented through a face key point detection model. Since the face shape cannot be controlled only by the face key points, a face contour is added as an additional constraint. The face contour may be extracted by using an edge detection algorithm such as Canny.

In actual application, since the face key point information and the face contour information are information with different semantics, the face information fusion model is additionally designed for processing in this embodiment of the invention. FIG. 5 is a schematic structural diagram of a face information fusion model according to an embodiment of the invention. Herein, the face information fusion model includes three groups of convolutional layers with different scales. The scales are respectively 3x3, 5x5, and 7x7. Feature extraction is respectively performed on the face key point information and the face contour information by using the face information fusion model, to obtain feature maps of the face key point information and the face contour information. Then, the two feature maps are stitched along a feature channel dimension, to obtain fused face information. The fused face information is used as an input of the feature extraction model (such as controlnet). Herein, the multi-scale feature extraction and fusion mode can obtain richer feature information, thereby enhancing a fusion effect.

(2) Image supervision self-attention module. Supervision of the facial element feature such as the color, style, texture, and light and shadow of the face sketch is further added based on the structure control of the key points and the contour. Specifically, in the self-attention network of Unet, the key-value is extended as stitching of a current feature and the facial element feature. After the noised latent variable of the face sketch is processed by the image encoder of Unet, a latent variable with a lower dimension is obtained, and a key-value matrix transformation weight is shared with the self-attention network. In this embodiment of the invention, the self-attention network includes both attention to the face sketch itself and attention to the face in the face sketch, so that the generation process better keeps the features of the face in the face sketch.

A backbone network Unet (i.e., the image denoising model) is mainly formed by stacking a convolutional network and a self-attentive network. Because the self-attention processing at each time can make each image block in an image interact, the self-attention network searches for useful information in the image after weight change. In some embodiments, the self-attention network linearly projects an inputted feature *v* into *Q, K,* and *V*:

$$Q = W^Q v, \qquad K = W^K v, \qquad V = W^V v,$$

where $W^Q$, $W^K$, $W^V$ are learnable linear transformation matrixes. A calculation formula of the self-attention processing is:

$$Att(v) = softmax\left(\frac{QK^T}{\sqrt{d}}\right)V \,.$$

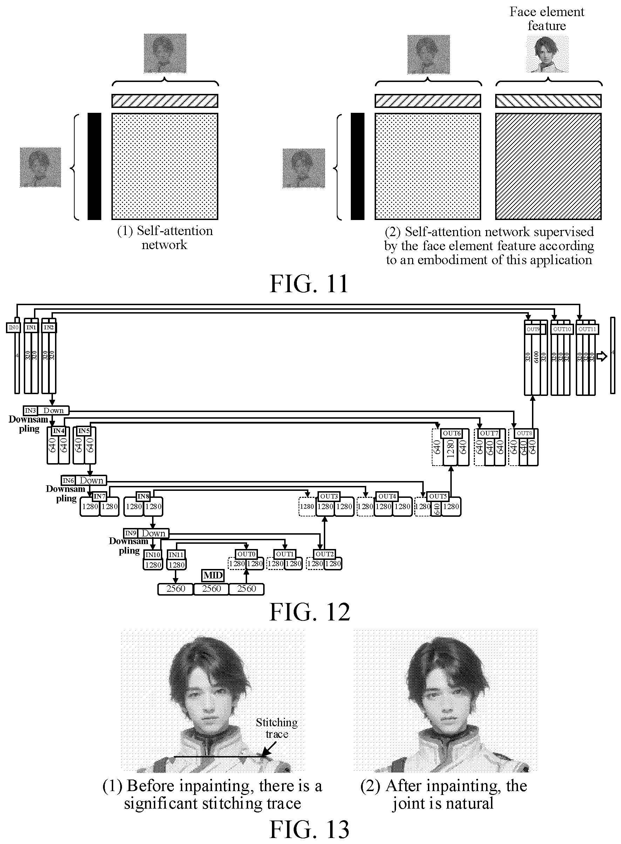

In this embodiment of the invention, the facial element feature of the face sketch is additionally added to the self-attention network as a supervision signal, as shown in FIG. 11(2). Specifically, it is assumed that the face sketch is $x_{sup}$; the latent variable obtained by the first encoder of Unet is $z_{sup}$; a corresponding linear transformation matrix $W^K_{sup}$ is added; and $W^V_{sup}$ is configured for linear projection. In this way, features obtained by the linear projection of the attention network are:

$$Q = W^Q v, \quad K' = \left[W^K v; W^K_{sup} z_{sup}\right], \quad V' = \left[W^V v; W^V_{sup} z_{sup}\right].$$

Correspondingly, a calculation formula of the self-attention processing is:

$$Att(v) = softmax\left(\frac{Q(K')^T}{\sqrt{d}}\right)V'.$$

Herein, since an output dimension of the self-attention network is the same as a dimension of $Q$. Therefore, before and after the self-attention network adds the facial element feature, a dimension of an outputted feature of the self-attention network is unchanged, which can maintain a network connection relationship of Unet and facilitate modification on Unet.

In actual application, self-attention calculation of the facial element feature may be added to only a part of the self-attention network of Unet, to reduce a calculation amount and improve calculation efficiency. For example, FIG. 12 is a schematic structural diagram of an image denoising model according to an embodiment of the invention. Herein, a Unet structure shown in FIG. 12 includes three rounds of downsampling. Self-attention processing is performed on an IN1 layer and an IN2 layer, which causes high calculation complexity which reaches an order of magnitude of $(64 \times 64 + 64 \times 64)^2$. Therefore, the self-attention calculation for the facial element feature may not be added to the IN1 layer and the IN2 layer, but is only added to IN4, IN5, IN7, IN8, MID layers obtained after downsampling and corresponding output layers, thereby reducing the calculation amount of the self-attention processing. Certainly, if calculation power permits, the self-attention calculation of the facial element feature may alternatively be added to each self-attention network of Unet, to further enhance an image refinement effect.

Herein, the face information fusion model and the feature extraction model in the facial refinement model need to be trained, and the linear transformation matrixes $W^K_{sup}$ and $W^V_{sup}$ of the self-attention network also require parameters determined by training. Other parameters (for example, other layers of Unet, an encoder, and a decoder) of the image generation and diffusion model in the face refinement model may use pre-trained weights, and a freezing parameter does not participate in training. In actual implementation, during training initialization, it is set that $W^K_{sup} = W^K$ and $W^V_{sup} = W^V$, rather than random initialization, thereby increasing a convergence speed of model training. During model training, 1) training data includes a large number of face images. During preprocessing, key points and contours of the face images are extracted. Meanwhile, corresponding "original image" data is generated based on image degradation (such as Gaussian blurring). 2) For example, training parameters include: A batch size is equal to 64; a learning rate is equal to 1e-4; a quantity of training operations is 50000; and an optimizer is Adam. In actual implementation, the training parameters may be adjusted according to needs. 3) An image reconstruction loss function $L_{LDM}$ may be used as a loss function, as shown below:

$$L_{LDM} = \mathbb{E}_{\mathcal{E}(\mathrm{x}), \epsilon \sim \mathcal{N}(0,1), t}\left[\|\epsilon - \epsilon_\theta(z_t, t)\|_2^2\right].$$

Where $\epsilon$ represents Gaussian noise; $\theta$ represents a network parameter of Unet; and $z_t$ represents a noised latent variable; and $t$ represents a sampling time point.

(3) Image gradient-based mask stitching and inpainting module. The face sketch is usually a part of a character sketch of a complete character. Therefore, to "stitch" and inpaint the refined face image to the refined character image (i.e., a refinement result of another part in the character sketch, such as a character body or a background), distortion misplacement at an image joint need to be processed. The distortion misplacement is caused by the fact that the face and the character body are from refinement flows of different stages. FIG. 13 is a schematic diagram of a stitching and inpainting result of a refined face image according to an embodiment of the invention. Herein, as shown in FIG. 13(1), a refined face image is directly pasted back to a refined character image, and a significant stitching trace can be seen on a non-inpainted image. However, as shown in FIG. 13(2), a stitched part of an inpainted image looks more natural. Therefore, an embodiment of the invention provides an image gradient-based mask inpainting policy to inpaint an image joint, which can significantly reduce the distortion misplacement caused by image stitching, making transition at the image joint more natural.

Specifically, an image mask is first generated, and then stitching and inpainting are performed based on the image mask through an inpainting function of stable diffusion. FIG. 8 is a schematic diagram of generation of an image mask according to an embodiment of the invention. A flow of generating the image mask includes:

(1) Generate a gradient image (i.e., the above target gradient image). Herein, FIG. 8(5) shows a generated gradient image. The gradient image indicates that an inpainting strength in the middle (white highlight) is high, and the inpainting strength gradually decreases from the middle to two sides. In this way, a transition effect on a joint of an inpainted image is smoother. Referring to FIG. 8, in actual application, the gradient image may be generated through the following codes:

gradient = Image.linear_gradient("L"); //generate an initial gradient image of 256*256, brightness of the initial gradient image. Brightness of the initial gradient image gradually decreases from a first image edge on the bottom to a second image edge on the top, and the brightness is 0 at the second image edge, as shown in FIG. 8(1).
row _ gradient = Image.new ("L", (face.width, tile_height), "black"); //generate a full-black intermediate image of 256*64, as shown in FIG. 8(2).
row_gradient.paste(gradient.resize((face.width,tile_height//2),resample=Image.BICU BIC), (0, 0)); //obtain a rectangular gradient image of 256*32 by cutting, and paste the rectangular gradient image to a first region of the intermediate image, as shown in FIG. 8(3) and FIG. 8(4).
row_gradient.paste(gradient.rotate(180).resize((face.width,tile_height//2),resample=I mage.BICUBIC), (0, tile_height//2)); //rotate the rectangular gradient image by 180 degrees, and paste the rectangular gradient image obtained by rotation to a second region of the intermediate image, to obtain a target gradient image, as shown in FIG. 8(5).

Where face.width represents a width of a face sketch, and tile_height = 64 represents a width of the gradient image.

(2) The gradient image is applied to four edges of the face sketch, to obtain an image mask for inpainting an image joint, as shown in FIG. 8(6). In this way, based on the image mask, image stitching and inpainting can be implemented by invoking an image inpainting function of stable diffusion.

Herein, this embodiment of the invention may be applied to various scenes (for example, an original image design scene of a game, an animation or cartoon design scene, or an advertisement design scene), including refinement of a face sketch, and different model parameters can be designed according to scene requirements. Herein, faces appearing in the accompanying drawings in the embodiments of the invention are synthetic, unreal faces.

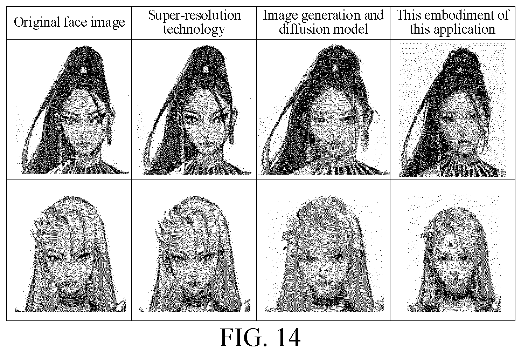

By using the above embodiments of the invention, both face sketch refinement efficiency and a face sketch refinement effect can be improved. FIG. 14 is a schematic diagram of enhanced face images according to an embodiment of the invention. Herein, the enhanced face images are obtained respectively through (1) a super-resolution technology, (2) an image generation and diffusion model, and (3) refinement on face sketches in the embodiments of the invention. As can be seen from FIG. 14, compared with enhanced face images generated by using other modes, the enhanced face images generated in this embodiment of the invention better keep facial features of faces in the face sketches, and detailed content of the face sketches is enriched, so that elements such as the skins, the light and shadows, the hairs, the textures, and the styles are more lifelike and more natural.

The following continues to describe an exemplary structure in which an image enhancement apparatus 555 according to an embodiment of the invention is implemented as software modules. In some embodiments, as shown in FIG. 2, the software modules of the image enhancement apparatus 555 that are stored in the memory 550 may include: an obtaining module 5551, configured to: obtain a latent variable of a to-be-enhanced face image, and add noise to the latent variable, to obtain a noised latent variable of the face image, the face image being an image of a face of a target object; an extraction module 5552, configured to extract a facial feature of the face from the face image; a denoising module 5553, configured to denoise the noised latent variable using the facial feature, to obtain a denoised latent variable of the face image; and a reconstruction module 5554, configured to perform image reconstruction on the denoised latent variable to obtain an enhanced face image of the face image.

In some embodiments, the extraction module 5552 is further configured to: perform face key point extraction on the face image to obtain face key point information of the face image, and perform edge detection on the face image to obtain face contour information of the face image; fuse the face key point information with the face contour information to obtain fused face information of the face image; and perform first feature extraction on the fused face information to obtain the facial feature of the face.

In some embodiments, the first feature extraction process is implemented through cascaded M first encoding layers, M being an integer greater than 0. The extraction module 5552 is further configured to: encode the fused face information by invoking a 1-st first encoding layer in the M first encoding layers, to obtain a facial feature of the face that is outputted by the 1-st first encoding layer; encode, by invoking an i-th first encoding layer in the M first encoding layers, a facial feature outputted by an (i-1)-th first encoding layer, to obtain a facial feature of the face that is outputted by the i-th first encoding layer; and traverse the i to obtain the facial feature of the face that is outputted by each of the M first encoding layers, i being an integer greater than 0 and not greater than M.

In some embodiments, the denoising process is implemented through a first image denoising model; the first image denoising model includes a first encoder and a first decoder; the first decoder includes cascaded M first decoding layers; and the first decoding layers and the first encoding layers are in one-to-one correspondence. The denoising module 5553 is further configured to: encode the noised latent variable by invoking the first encoder, to obtain an encoded latent variable; decode, by invoking an M-th first decoding layer in the M first decoding layers, the encoded latent variable and a facial feature outputted by an M-th first encoding layer, to obtain a decoded latent variable outputted by the M-th first decoding layer; decode, by invoking an i-th first decoding layer in the M first decoding layers, a decoded latent variable outputted by an (i+1)-th first decoding layer and the facial feature outputted by the i-th first encoding layer, to obtain a decoded latent variable outputted by the i-th first decoding layer; and traverse the i to obtain a decoded latent variable outputted by a 1-st first decoding layer in the M first decoding layers, and use the decoded latent variable outputted by the 1-st first decoding layer as the denoised latent variable obtained by denoising the noised latent variable.

In some embodiments, the facial feature is a facial structure feature. The extraction module 5552 is further configured to: after extracting the facial feature of the face from the face image, extract a facial element feature of the face from the face image. The denoising module 5553 is further configured to encode the noised latent variable using the facial element feature to obtain the encoded latent variable.

In some embodiments, the first encoder includes cascaded P third encoding layers, P being an integer greater than 0. The denoising module 5553 is further configured to: stitch the facial element feature with the noised latent variable to obtain a target stitched feature for a 1-st third encoding layer, and encode the target stitched feature for the 1-st third encoding layer by invoking the 1-st third encoding layer in the P third encoding layers, to obtain an encoding result outputted by the 1-st third encoding layer; stitch the facial element feature with an encoding result outputted by a (p-1)-th third encoding layer to obtain a target stitched feature for a p-th third encoding layer, and encode the target stitched feature for the p-th third encoding layer by invoking the p-th third encoding layer in the P third encoding layers, to obtain an encoding result outputted by the p-th third encoding layer; traverse the p to obtain an encoding result outputted by a P-th third encoding layer, p being an integer greater than 0 and not greater than P; and use the encoding result outputted by the P-th third encoding layer as the encoded latent variable.

In some embodiments, the denoising module 5553 is further configured to: calculate, based on a first weight value of the encoded latent variable and a second weight value of the facial feature outputted by the M-th first encoding layer, a weighted sum of the encoded latent variable and the facial feature outputted by the M-th first encoding layer, to obtain a second stitched feature; and decode the second stitched feature to obtain the decoded latent variable outputted by the M-th first decoding layer. The denoising module 5553 is further configured to: calculate, based on a third weight value of the decoded latent variable outputted by the (i+1)-th first decoding layer and a fourth weight value of the facial feature outputted by the i-th first encoding layer, a weighted sum of the decoded latent variable outputted by the (i+1)-th first decoding layer and the facial feature outputted by the i-th first encoding layer, to obtain a third stitched feature; and decode the third stitched feature to obtain the decoded latent variable outputted by the i-th first decoding layer.

In some embodiments, the extraction module 5552 is further configured to: perform convolution at a plurality of different scales on the face key point information to obtain first convolution features at the scales, and combine the first convolution features at the scales, to obtain a first combined feature; perform convolution at a plurality of different scales on the face contour information to obtain second convolution features at the scales, and combine the second convolution features at the scales, to obtain a second combined feature; and stitch the first combined feature with the second combined feature to obtain a first stitched feature, and use the first stitched feature as the fused face information of the face image.

In some embodiments, the extraction module 5552 is further configured to: perform face key point extraction on the face image to obtain face key point information of the face image, and perform second feature extraction on the face key point information to obtain a facial feature of the face; or perform edge detection on the face image to obtain face contour information of the face image, and perform third feature extraction on the face contour information to obtain a facial feature of the face; or perform facial element extraction on the face image to obtain facial element information of the face image, and perform fourth feature extraction on the facial element information to obtain the facial feature of the face.

In some embodiments, the denoising process is implemented through a second image denoising model. The second image denoising model includes a second encoder and a second decoder. The second encoder includes cascaded N second encoding layers, and N is an integer greater than 0. The denoising module 5553 is further configured to: stitch the noised latent variable with the facial feature to obtain a fourth stitched feature; perform self-attention processing on the fourth stitched feature by invoking a 1-st second encoding layer in the N second encoding layers, to obtain a 1-st self-attention result, and encode the 1-st self-attention result to obtain an encoding result outputted by the 1-st second encoding layer; stitch an encoding result outputted by a (j-1)-th second encoding layer with the facial feature to obtain a fifth stitched feature; perform self-attention processing on the fifth stitched feature by invoking a j-th second encoding layer in the N second encoding layers, to obtain a j-th self-attention result, and encode the j-th self-attention result to obtain an encoding result outputted by the j-th second encoding layer; traverse the j to obtain an encoding result outputted by an N-th second encoding layer, j being an integer greater than 0 and not greater than N; and decode the encoding result outputted by the N-th second encoding layer to obtain the denoised latent variable.

In some embodiments, the face image belongs to an object image of the target object. The reconstruction module 5554 is further configured to: after performing the image reconstruction on the denoised latent variable to obtain the enhanced face image of the face image, obtain an enhanced object image of the object image, and determine a target region, which corresponds to the face image, in the enhanced object image; and replace the target region with the enhanced face image to obtain a first enhanced image.

In some embodiments, the enhanced face image has a plurality of image edges. The reconstruction module 5554 is further configured to: after replacing the target region with the enhanced face image to obtain the first enhanced image, respectively generate rectangular target gradient images corresponding to the image edges, a length of a target gradient image being the same as a length of the image edge, brightness of the target gradient image decreasing from a center line to two sides, and a length of the center line being the length of the target gradient image; respectively add the target gradient image to a target image to obtain an image mask, pixel values of pixels of the target image being 0, and the center lines of the target gradient images in the image mask overlapping the corresponding image edges in the enhanced face image; and inpaint the first enhanced image based on the image mask, to obtain a second enhanced image.

In some embodiments, the obtaining module 5551 is further configured to encode the to-be-enhanced face image to obtain the latent variable. The reconstruction module 5554 is further configured to decode the denoised latent variable to obtain the enhanced face image of the face image.

In some embodiments, the denoising includes T rounds of denoising, T being an integer greater than 0. The denoising module 5553 is further configured to: perform a 1-st round of denoising on the noised latent variable using the facial feature, to obtain an intermediate denoised latent variable outputted by the 1-st round of denoising; perform, using the facial feature, a t-th round of denoising on an intermediate denoised latent variable outputted by a (t-1)-th round of denoising, to obtain an intermediate denoised latent variable outputted by the t-th round of denoising; and traverse the t to obtain an intermediate denoised latent variable outputted by a T-th round of denoising, and using the intermediate denoised latent variable outputted by the T-th round of denoising as the denoised latent variable of the face image.

Herein, descriptions of the apparatus embodiments are similar to the descriptions of the foregoing method embodiments. The apparatus embodiments have beneficial effects similar to those of the method embodiments and thus are not repeatedly described. Technical details not mentioned in the image enhancement apparatus according to this embodiment of the invention may be understood according to the descriptions of the technical details in the foregoing method embodiments.

An embodiment of the invention further provides a computer program product. The computer program product includes a computer-executable instruction or a computer program. The computer-executable instruction or the computer program is stored in a computer-readable storage medium. A processor of an electronic device reads the computer-executable instruction or the computer program from the computer-readable storage medium, and the processor executes the computer-executable instruction or the computer program, to cause the electronic device to perform the image enhancement method according to the embodiments of the invention.

An embodiment of the invention further provides a computer-readable storage medium, having a computer-executable instruction or a computer program stored therein. When the computer-executable instruction or the computer program is executed by a processor, the processor is caused to perform the image enhancement method according to the embodiments of the invention.

In some embodiments, the computer-readable storage medium may be a memory such as a ferroelectric RAM (FRAM), a read-only memory (ROM), a flash memory, a magnetic surface memory, a compact disc, or a compact disc ROM (CD-ROM). The computer-readable storage medium may include one or any combination of the aforementioned memories.

In some embodiments, the computer-executable instructions may be written in the form of program, software, software module, script, or code in any form of programming language (including compilation or interpretation language, or declarative or procedural language), and the computer executable instructions may be deployed in any form, including being deployed as an independent program or being deployed as a module, component, subroutine, or another unit suitable for use in a computing environment.

In an example, the computer-executable instruction may but may not necessarily correspond to a file in a file system, may be stored in a part of the file for storing other programs or data, for example, stored in one or more scripts in a hyper text markup language (HTML) document, stored in a single file specially used for the discussed program, or stored in a plurality of collaborative files (for example, files storing one or more modules, a subprogram, or a code part).

In an example, the computer-executable instructions may be deployed to be executed on one electronic device, on a plurality of electronic devices located at one site, or on a plurality of electronic devices distributed at a plurality of locations and connected by a communication network.

The foregoing descriptions are only an example of the invention and are not intended to limit the scope of protection of the invention. Any modification, equivalent replacement, or improvement made within the spirit and scope of the invention fall within the protection scope of the invention.

**Claims**

1. An image enhancement method, applied to an electronic device and comprising:

    obtaining a latent variable of a face image, and adding noise to the latent variable to obtain a noised latent variable of the face image, the face image being an image of a face of a pre-defined object;
    extracting a facial feature of the face from the face image;
    denoising the noised latent variable using the facial feature to obtain a denoised latent variable of the face image; and
    performing image reconstruction on the denoised latent variable to obtain an enhanced face image.

2. The method according to claim 1, wherein extracting the facial feature of the face from the face image comprises:

    extracting a face key point from the face image to obtain face key point information of the face image;
    performing edge detection on the face image to obtain face contour information of the face image;
    fusing the face key point information with the face contour information to obtain fused face information of the face image; and
    performing first feature extraction on the fused face information to obtain the facial feature of the face.

3. The method according to claim 2, wherein a process of the first feature extraction is implemented through cascaded M first encoding layers, M being an integer greater than 0; and performing the first feature extraction on the fused face information to obtain the facial feature of the face comprises:

    encoding the fused face information by invoking a 1-st first encoding layer in the M first encoding layers, to obtain a facial feature of the face outputted by the 1-st first encoding layer;
    encoding, by invoking an i-th first encoding layer in the M first encoding layers, a facial feature outputted by an (i-1)-th first encoding layer, to obtain a facial feature of the face outputted by the i-th first encoding layer; and
    traversing i layers to obtain the facial feature of the face outputted by each of the M first encoding layers, i being an integer greater than 0 and not greater than M.

4. The method according to claim 3, wherein a process of the denoising is implemented through a first image denoising model, the first image denoising model comprises a first encoder and a first decoder, the first decoder comprises cascaded M first decoding layers, the first decoding layers and the first encoding layers are in one-to-one correspondence; and denoising the noised latent variable using the facial feature to obtain the denoised latent variable comprises:

    encoding the noised latent variable by invoking the first encoder to obtain an encoded latent variable;
    decoding, by invoking an M-th first decoding layer in the M first decoding layers, the encoded latent variable and a facial feature outputted by an M-th first encoding layer, to obtain a decoded latent variable outputted by the M-th first decoding layer;
    decoding, by invoking an i-th first decoding layer in the M first decoding layers, a decoded latent variable outputted by an (i+1)-th first decoding layer and the facial feature outputted by the i-th first encoding layer, to obtain a decoded latent variable outputted by the i-th first decoding layer; and
    traversing i layers to obtain a decoded latent variable outputted by a 1-st first decoding layer in the M first decoding layers, and determining the decoded latent variable outputted by the 1-st first decoding layer as the denoised latent variable.

5. The method according to claim 4, wherein the facial feature is a facial structure feature, and after extracting the facial feature of the face from the face image, the method further comprises:

extracting a facial element feature of the face from the face image; and
encoding the noised latent variable to obtain the encoded latent variable comprises:
encoding the noised latent variable using the facial element feature to obtain the encoded latent variable.

6. The method according to claim 5, wherein the first encoder comprises cascaded P third encoding layers, P being an integer greater than 0, and encoding the noised latent variable using the facial element feature to obtain the encoded latent variable comprises:

stitching the facial element feature with the noised latent variable to obtain a target stitched feature for a 1-st third encoding layer, and encoding the target stitched feature for the 1-st third encoding layer by invoking the 1-st third encoding layer in the P third encoding layers, to obtain an encoding result outputted by the 1-st third encoding layer;
stitching the facial element feature with an encoding result outputted by a (p-1)-th third encoding layer to obtain a target stitched feature for a p-th third encoding layer, and encoding the target stitched feature for the p-th third encoding layer by invoking the p-th third encoding layer in the P third encoding layers, to obtain an encoding result outputted by the p-th third encoding layer;
traversing p layers to obtain an encoding result outputted by a P-th third encoding layer, p being an integer greater than 0 and not greater than P; and
using the encoding result outputted by the P-th third encoding layer as the encoded latent variable.

7. The method according to claim 4, wherein decoding the encoded latent variable and the facial feature outputted by the M-th first encoding layer, to obtain the decoded latent variable outputted by the M-th first decoding layer comprises:

calculating, based on a first weight value of the encoded latent variable and a second weight value of the facial feature outputted by the M-th first encoding layer, a weighted sum of the encoded latent variable and the facial feature outputted by the M-th first encoding layer, to obtain a second stitched feature; and
decoding the second stitched feature to obtain the decoded latent variable outputted by the M-th first decoding layer; wherein
decoding the decoded latent variable outputted by the (i+1)-th first decoding layer and the facial feature outputted by the i-th first encoding layer, to obtain the decoded latent variable outputted by the i-th first decoding layer comprises:

calculating, based on a third weight value of the decoded latent variable outputted by the (i+1)-th first decoding layer and a fourth weight value of the facial feature outputted by the i-th first encoding layer, a weighted sum of the decoded latent variable outputted by the (i+1)-th first decoding layer and the facial feature outputted by the i-th first encoding layer, to obtain a third stitched feature; and
decoding the third stitched feature to obtain the decoded latent variable outputted by the i-th first decoding layer.

8. The method according to claim 2, wherein fusing the face key point information with the face contour information, to obtain the fused face information of the face image comprises:

performing convolution at a plurality of different scales on the face key point information to obtain first convolution features at the different scales, and combining the first convolution features at the different scales, to obtain a first combined feature;
performing convolution at a plurality of different scales on the face contour information to obtain second convolution features at the different scales, and combining the second convolution features at the different scales, to obtain a second combined feature; and
stitching the first combined feature with the second combined feature to obtain a first stitched feature, and using the first stitched feature as the fused face information of the face image.

9. The method according to any one of claims 1 to 8, wherein extracting the facial feature of the face from the face image comprises:

extracting a face key point from the face image to obtain face key point information of the face image, and performing second feature extraction on the face key point information to obtain the facial feature of the face; or performing edge detection on the face image to obtain face contour information of the face image, and performing third feature extraction on the face contour information to obtain the facial feature of the face; or extracting a facial element from the face image to obtain facial element information of the face image, and performing fourth feature extraction on the facial element information to obtain the facial feature of the face.

10. The method according to any one of claims 1 to 9, wherein a process of the denoising is implemented through a second image denoising model, the second image denoising model comprises a second encoder and a second decoder, the second encoder comprises cascaded N second encoding layers, N being an integer greater than 0; and denoising the noised latent variable using the facial feature, to obtain the denoised latent variable comprises:

stitching the noised latent variable with the facial feature to obtain a fourth stitched feature, performing self-attention processing on the fourth stitched feature by invoking a 1-st second encoding layer in the N second encoding layers, to obtain a 1-st self-attention result, and encoding the 1-st self-attention result to obtain an encoding result outputted by the 1-st second encoding layer;
stitching an encoding result outputted by a (j-1)-th second encoding layer with the facial feature to obtain a fifth stitched feature, performing self-attention processing on the fifth stitched feature by invoking a j-th second encoding layer in the N second encoding layers, to obtain a j-th self-attention result, and encoding the j-th self-attention result to obtain an encoding result outputted by the j-th second encoding layer;
traversing j layers to obtain an encoding result outputted by an N-th second encoding layer, j being an integer greater than 0 and not greater than N; and
decoding the encoding result outputted by the N-th second encoding layer to obtain the denoised latent variable.

11. The method according to any one of claims 1 to 10, wherein the face image belongs to an object image of the pre-defined object, and after performing the image reconstruction on the denoised latent variable to obtain the enhanced face image, the method further comprises:

obtaining an enhanced object image, and determining a region, which corresponds to the face image, in the enhanced object image; and
replacing the region with the enhanced face image to obtain a first enhanced image.

12. The method according to any one of claims 1 to 11, wherein the enhanced face image has a plurality of image edges, and after replacing the region with the enhanced face image to obtain the first enhanced image, the method further comprises:

respectively generating rectangular gradient images corresponding to the plurality of image edges, a length of each of the gradient images being the same as a length of a respective one of the plurality of image edges, brightness of each of the gradient images decreasing from a center line to two sides, and a length of the center line being the length of the gradient image;
respectively adding the gradient images to an image to obtain an image mask, pixel values of pixels in the image being 0, and the center line of each of the gradient images in the image mask overlapping a respective one of the plurality of image edges in the enhanced face image; and
inpainting the first enhanced image based on the image mask, to obtain a second enhanced image.

13. The method according to any one of claims 1 to 12, wherein

obtaining the latent variable of the face image comprises: encoding the face image to obtain the latent variable; and
performing the image reconstruction on the denoised latent variable to obtain the enhanced face image comprises: decoding the denoised latent variable to obtain the enhanced face image.

14. The method according to any one of claims 1 to 13, wherein the denoising comprises T rounds of denoising, T being an integer greater than 0, and denoising the noised latent variable using the facial feature, to obtain the denoised latent variable of the face image comprises:

performing a 1-st round of denoising on the noised latent variable using the facial feature, to obtain an intermediate denoised latent variable outputted by the 1-st round of denoising;

performing, using the facial feature, a t-th round of denoising on an intermediate denoised latent variable outputted by a (t-1)-th round of denoising, to obtain an intermediate denoised latent variable outputted by the t-th round of denoising; and

traversing t rounds to obtain an intermediate denoised latent variable outputted by a T-th round of denoising, and using the intermediate denoised latent variable outputted by the T-th round of denoising as the denoised latent variable of the face image.

15. An image enhancement apparatus, comprising:

an obtaining module, configured to: obtain a latent variable of a face image, and add noise to the latent variable, to obtain a noised latent variable of the face image, the face image being an image of a face of a pre-defined object; an extraction module, configured to extract a facial feature of the face from the face image; a denoising module, configured to denoise the noised latent variable using the facial feature, to obtain a denoised latent variable of the face image; and a reconstruction module, configured to perform image reconstruction on the denoised latent variable to obtain an enhanced face image.

16. An electronic device, comprising:

a memory, configured to store a computer-executable instruction; and a processor, configured to implement, when executing the computer-executable instruction stored in the memory, the image enhancement method according to any one of claims 1 to 14.

17. A computer-readable storage medium having stored therein a computer-executable instruction or a computer program, the computer-executable instruction or the computer program, when executed by a processor, implementing the image enhancement method according to any one of claims 1 to 14.

18. A computer program product, comprising a computer-executable instruction or a computer program, the computer-executable instruction or the computer program, when executed by a processor, implementing the image enhancement method according to any one of claims 1 to 14.

**FIG. 1**

**FIG. 2**

Obtain a latent variable of a to-be-enhanced face image, and add noise to the latent variable, to obtain a noised latent variable of the face image /101

Extract a facial feature of a face in the face image /102

Denoise the noised latent variable in conjunction with the facial feature, to obtain a denoised latent variable of the face image /103

Perform image reconstruction on the denoised latent variable to obtain an enhanced face image of the face /104

## FIG. 3

Perform face key point extraction on a face image to obtain face key point information of the face image, and perform edge detection on the face image to obtain face contour information of the face image /1021

Fuse the face key point information with the face contour information to obtain fused face information of the face image /1022

Perform first feature extraction on the fused face information to obtain a facial feature of a face /1023

## FIG. 4

FIG. 5

FIG. 6

FIG. 7

Second image edge

Brightness gradually decreases

First image edge

(1)

(2)

First region

(3)

(4)

The brightness at a center line is the highest

(5)

Second region

(6)

FIG. 8

Latent variable space

Noise adding module (Diffusion Process)

Image denoising model
(Denoising U-Net $\epsilon$ $\theta$)

X

Encoder

z

×(T−1)

Decoder

$\tilde{x}$

$Z_{T-1}$

Q K V    Q K V    Q K V    Q K V

$Z_T$

$Z_T$

Denoising process
(denoising step)

Q K V
Cross attention
(Cross attention)

Skip connection
(skip connection)

FIG. 9

To-be-refined sketch

Face detection model

Face sketch

Face refinement model

Refined face image

Stitching and inpainting model

Refined sketch

FIG. 10

(1) Self-attention
network

(2) Self-attention network supervised
by the face element feature according
to an embodiment of this application

FIG. 11

FIG. 12

(1) Before inpainting, there is a
significant stitching trace

(2) After inpainting, the
joint is natural

FIG. 13

FIG. 14

**EP 4 617 999 A1**

## INTERNATIONAL SEARCH REPORT

| | International application No. |
|---|---|
| | **PCT/CN2024/099632** |

| A. | CLASSIFICATION OF SUBJECT MATTER |
|---|---|

G06T5/00(2024.01)i; G06N3/0455(2023.01)i

According to International Patent Classification (IPC) or to both national classification and IPC

| B. | FIELDS SEARCHED |
|---|---|

Minimum documentation searched (classification system followed by classification symbols)

IPC: G06T, G06V, G06N

Documentation searched other than minimum documentation to the extent that such documents are included in the fields searched

Electronic data base consulted during the international search (name of data base and, where practicable, search terms used)

CNTXT, USTXT, VEN, IEEE, CNKI: 隐变量, 隐向量, 潜在, 噪, 去噪, 重建, 增强, 扩散, diffusion, noise, latent, enhanc+, reconstruct+, denoise

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116385848 A (CHONGQING UNIVERSITY OF TECHNOLOGY et al.) 04 July 2023 (2023-07-04) description, paragraph [0012] | 1-18 |
| A | CN 116501899 A (INTERNATIONAL DIGITAL ECONOMY ACADEMY IDEA (FUTIAN)) 28 July 2023 (2023-07-28) entire document | 1-18 |
| A | CN 116433516 A (UNIVERSITY OF ELECTRONIC SCIENCE AND TECHNOLOGY OF CHINA) 14 July 2023 (2023-07-14) entire document | 1-18 |
| A | US 2020349965 A1 (NESTA, F. et al.) 05 November 2020 (2020-11-05) entire document | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2024** | **24 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099632**

| Patent document cited in search report | | | Publication date (day/month/year) | Patent family member(s) | Publication date (day/month/year) |
|---|---|---|---|---|---|
| CN | 116385848 | A | 04 July 2023 | None | |
| CN | 116501899 | A | 28 July 2023 | None | |
| CN | 116433516 | A | 14 July 2023 | None | |
| US | 2020349965 | A1 | 05 November 2020 | None | |

Form PCT/ISA/210 (patent family annex) (July 2022)

**REFERENCES CITED IN THE DESCRIPTION**

**Patent documents cited in the description**

- CN 2023110573649